# EUROPEAN PATENT APPLICATION

(11) **EP 4 586 707 A1**
(43) Date of publication of application: **16.07.2025**
(21) Application number: 23872881.0
(22) Date of filing: 13.09.2023
(51) Int. Cl.: H04W 60/00, H04W 8/18, H04W 88/08, H04W 88/12, H04W 92/12, H04W 92/20, H04W 92/24

(54) **ELECTRONIC DEVICE AND METHOD FOR SUBSCRIPTION AUDIT**

(30) Priority: 30.09.2022 KR 20220125832; 03.03.2023 KR 20230028802
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); PARK, Soyeun, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2023/013763
(87) International publication number: WO 2024/071762

(57) **Abstract**

The present disclosure relates to a 5G or 6G communication system for supporting a higher data transmission rate than a 4G communication system such as LTE. In embodiments, a near-real time (RT) RIC electronic device is provided. The electronic device may comprise: a memory that stores instructions; at least one transceiver; and at least one processor coupled to the at least one transceiver. The instructions, when executed by the at least one processor, may cause the electronic device to transmit an audit request message to an E2 node through the at least one transceiver, and to receive an audit response message from the E2 node through the at least one transceiver.

## Description

### [Technical Field]

The following descriptions relate to an electronic device and a method for a subscription audit.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In 6G communication systems, the functions of the RAN are expected to be further segmented into service subscribers and service providers. In service-based networks, service subscription verification procedures for service subscription status will be applied in various functions.

### [Disclosure]

### [Technical Solution]

In embodiments, a method performed by an E2 node may include transmitting an audit request message to a near-real time radio access network intelligence controller (Near-RT RIC). The method may include receiving an audit response message from the Near-RT RIC. The RIC subscription audit response message may include one or more subscription information within the Near-RT RIC. Each of the one or more subscription information may include a RAN function (identifier) ID and a RIC request ID for the corresponding RIC subscription.

In embodiments, a method performed by a Near-RT RIC may include transmitting an audit request message to an E2 node. The method may include receiving an audit response message from the E2 node. The RIC subscription audit response message may include one or more subscription information within the E2 node. Each subscription information of the one or more subscription information may include a RAN function ID and a RIC request ID for the corresponding RIC subscription.

In embodiments, a method performed by an E2 node may include receiving an audit request message from a Near-RT RIC. The method may include transmitting an audit response message to the Near-RT RIC. The RIC subscription audit response message may include one or more subscription information within the E2 node. Each of the one or more subscription information may include a RAN function ID and a RIC request ID for the corresponding RIC subscription.

In embodiments, a method performed by a Near-RT RIC may include receiving an audit request message from an E2 node. The method may include transmitting an audit response message to the E2 node. The RIC subscription audit response message may include one or more subscription information within the Near-RT RIC. Each subscription information of the one or more subscription information may include a RAN function ID and a RIC request ID for the corresponding RIC subscription.

In embodiments, an electronic device of an E2 node may include at least one transceiver, and at least one processor coupled with the at least one transceiver. The at least one processor may control the at least one transceiver to transmit an audit request message to a near-real time radio access network intelligence controller (Near-RT RIC). The at least one processor may control the at least one transceiver to receive an audit response message from the Near-RT RIC. The RIC subscription audit response message may include one or more subscription information within the Near-RT RIC. Each subscription information of the one or more subscription information may include a RAN function ID and a RIC request ID for the corresponding RIC subscription.

In embodiments, an electronic device of a Near-RT RIC may include at least one transceiver; and at least one processor coupled with the at least one transceiver. The at least one processor may control the at least one transceiver to transmit an audit request message to an E2 node. The at least one processor may control the at least one transceiver to receive an audit response message from the E2 node. The RIC subscription audit response message may include one or more subscription information within the E2 node. Each subscription information of the one or more subscription information may include a RAN function ID and a RIC request ID for the corresponding RIC subscription.

In embodiments, an electronic device of an E2 node may include at least one transceiver, and at least one processor coupled with the at least one transceiver. The at least one processor may control the at least one transceiver to receive an audit request message from a Near-RT RIC. The at least one processor may control the at least one transceiver to transmit an audit response message to the Near-RT RIC. The RIC subscription audit response message may include one or more subscription information within the E2 node. Each subscription information of the one or more subscription information may include a RAN function ID and a RIC request ID for the corresponding RIC subscription.

In embodiments, an electronic device of a Near-RT RIC may include at least one transceiver, and at least one processor coupled with the at least one transceiver.

The at least one processor may control the at least one transceiver to receive an audit request message from an E2 node. The at least one processor may control the at least one transceiver to transmit an audit response message to the E2 node. The RIC subscription audit response message may include one or more subscription information in the Near-RT RIC. Each subscription information of the one or more subscription information may include a RAN function ID and a RIC request ID for the corresponding RIC subscription.

In embodiments, a method performed by a Near-RT RIC is provided. The method may include transmitting an audit request message to an E2 node. The method may include receiving an audit response message from the E2 node. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, a method performed by an E2 node is provided. The method may include receiving an audit request message from a near-real time radio access network intelligence controller (Near-RT RIC). The method may include transmitting an audit response message to the Near-RT RIC in response to the audit request message. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, an electronic device of Near-RT RIC is provided. The electronic device may include memory storing instructions, at least one transceiver, and at least one processor coupled with the at least one transceiver. The instructions, when executed by the at least one processor, may cause the electronic device to transmit an audit request message to the E2 node through the at least one transceiver, and receive an audit response message from the E2 node through the at least one transceiver. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, an electronic device of E2 node is provided. The electronic device may include memory storing instructions, at least one transceiver, and at least one processor coupled with the at least one transceiver. The instructions, when executed by the at least one processor, may cause the electronic device to receive an audit request message from a Near-RT RIC through the at least one transceiver, and transmit an audit response message to the Near-RT RIC through the at least one transceiver. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, a non-transitory storage medium is provided. The non-transitory storage medium may include memory storing instructions. The instructions, when executed by at least one processor, may cause a Near-RT RIC to transmit an audit request message to an E2 node and receive an audit response message from the E2 node. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, a non-transitory storage medium is provided. The non-transitory storage medium may include memory storing instructions. The instructions, when executed by at least one processor, may cause an E2 node to receive an audit request message from a Near-RT RIC and, transmit, in response to the audit request message, an audit response message to the Near-RT RIC. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

### [Description of the Drawings]

FIG. 1 illustrates an example of a 4^{th} generation (4G) long term evolution (LTE) core system.
FIG. 2A illustrates an example of a 5^{th} generation (5G) non-standard alone (NSA) system.
FIG. 2B illustrates an example of an architecture for an O-RAN.
FIG. 3 illustrates a protocol stack of an E2 application protocol message in a wireless access network according to embodiments.
FIG. 4 illustrates an example of a connection between a base station and a radio access network intelligence controller (RIC) in a wireless access network according to embodiments.
FIG. 5 illustrates a configuration of a device in a wireless access network according to embodiments.
FIG. 6 illustrates a logical function related to an E2 message of an E2 node and an RIC in a wireless access network according to embodiments.
FIG. 7 illustrates examples of a function split between an E2 node and an RIC according to embodiments.
FIG. 8 illustrates an implementation example of an E2 node and an RIC according to embodiments.
FIG. 9 illustrates examples of function split between a centralized unit (CU) and an RIC according to embodiments.
FIG. 10 illustrates a functional block of each of a Near-RT RIC and an E2 node according to a subscription procedure, according to embodiments.
FIG. 11A illustrates an example of a subscription audit procedure between a Near-RT RIC and an E2 node according to an embodiment.
FIG. 11B illustrates an example of a subscription audit procedure between a Near-RT RIC and an E2 node according to an embodiment.
FIG. 12A illustrates an example of a subscription audit procedure initiated by an activity time according to an embodiment.
FIG. 12B illustrates an example of a subscription audit procedure initiated based on an event according to an embodiment.
FIG. 13 illustrates an example of subscription management using a subscription audit procedure according to an embodiment.
FIG. 14 illustrates an example of subscription management using a subscription audit procedure according to an embodiment.
FIG. 15 illustrates an example of subscription management using a subscription audit procedure according to an embodiment.
FIG. 16 illustrates an example of subscription management using a subscription audit procedure according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Hereinafter, the present disclosure relates to a control procedure between a device in a radio access network (RAN) and a device controlling the RAN in a wireless communication system. Specifically, the present disclosure relates to a procedure, a message, and a method for an E2 node and an RIC to perform standard-compliant operations by providing the RIC with a version number of E2AP standard (e.g., E2AP 2.02) from the E2 node on an E2 interface and ensure backward compatibility.

The terms referring to a configuration (e.g., setup, setting, arrangement, control), terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms referring to an operation state (e.g., step, operation, procedure), terms referring to data (e.g., packet, message, user stream, information, bit, symbol, codeword), terms referring to a channel, terms referring to a network entity (e.g., distributed unit (DU), radio unit (RU), central unit (CU), control plane (CU-CP), user plane (CU-UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a device component, and the like, which are used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, unless explicitly stated otherwise, 'A' to 'B' refers to at least one of elements from A (including A) to B (including B). Hereinafter, 'C' and/or 'D' means including at least one of 'C' or 'D', that is, {'C', 'D', and 'C' and 'D'}.

In addition, the present disclosure describes various embodiments using terms used in some communication standards (e.g., 3rd generation partnership project (3GPP), extensible radio access network (xRAN), open radio access network (O-RAN)), but these are merely an example for explanation. Various embodiments of the present disclosure may be easily modified and applied in other communication systems.

With the commercialization of 4^{th} generation (4G)/5^{th} generation (5G) communication systems (e.g., new radio (NR)), differentiated service support for users in virtualized networks has become required. 3GPP is a joint research project among mobile communication-related organizations aimed at developing third-generation mobile communication system standards that are globally applicable within a scope of IMT-2000 project of the International Telecommunication Union (ITU). 3GPP was established in December 1998, and 3GPP standards are based on advanced GSM standards, and encompass radio, core network, and service architecture in the scope of standardization. Accordingly, open radio access network (O-RAN) newly defines radio unit (RU), digital unit (DU), central unit (CU)-control plane (CP), and CU-user plane (CU-UP), which are nodes constitute 3GPP network entity (NE) and a base station, as O-RAN (O)-RU, O-DU, O-CU-CP, and O-CU-UP, respectively, and further standardized near-real-time (NRT) radio access network intelligent controller (RT). The present disclosure is for supporting an operator specific service model in an E2 interface in which the RIC requests a service from an O-DU, O-CU-CP, or O-CU-UP. Herein, O-RU, O-DU, O-CU-CP, and O-CU-UP may be understood as objects constituting an RAN capable of operating according to Othe -RAN standard, and may be referred to as an E2 node. An interface with the objects constituting the RAN capable of operating according to O -RAN standard between the RIC and E2 nodes utilizes E2 application protocol (E2AP).

The RIC is a logical node capable of collecting information on a cell site where a terminal and O-DU, O-CU-CP or O-CU-UP transmit and receive. The RIC may be implemented in a server format that is centrally located in one physical location. Connections between O-DU and RIC, O-CU-CP and RIC, and O-CU-UP and RIC may be established through Ethernet. To this end, an interface standard for communication between O-DU and RIC, O-CU-CP and RIC, and O-CU-UP and RIC have become necessary, and a message standard for E2-DU, E2-CU-CP, and E2-CU-UP and the definition of a procedure between RIC and O-DU, O-CU-CP, and O-CU-UP are required. In particular, differentiated service support for users is required in a virtualized network, and by centralizing call processing messages/functions generated in O-RAN to RIC, a functional definition of messages of E2-DU, E2-CU-CP, and E2-CU-UP to support services for wide cell coverage is required.

The RIC may communicate with O-DU, O-CU-CP, and O-CU-UP using the E2 interface, and may set event occurrence conditions by generating and transmitting a subscription message. Specifically, the RIC may set call processing EVENT by generating an E2 subscription request message and transmitting it to an E2 node (e.g., O-CU-CP, O-CU-UP, O-DU). In addition, after setting the EVENT, the E2 node transmits the transmitted subscription request response message to the RIC.

The E2 node may transmit a current state to the RIC through an E2 indication/report. The RIC may provide control for the O-DU, O-CU-CP, and O-CU-UP using an E2 control message. Various embodiments of the present disclosure propose an E2 indication message that transmits measurement information per UE at a period set by a subscription event condition in the O-DU. In addition, various embodiments of the present disclosure propose a message for controlling a resource transmitted from the RIC to the O-DU.

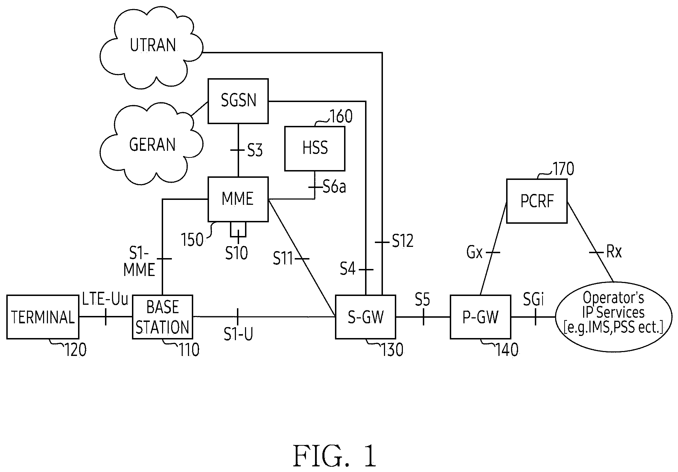

FIG. 1 illustrates an example of a 4^{th} generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides the terminal 120 with wireless access. For example, the base station 110 is a device that performs scheduling by collecting state information such as a buffer state, available transmission power, and a channel state of the terminal 110. The base station 110 has a coverage defined as a certain geographical area based on a distance capable of transmitting a signal. The base station 110 is connected to the MME 150 through an S1-MME interface. In addition to the base station, the base station 110 may be referred to as an 'access point (AP)', 'eNodeB (eNB)', 'wireless point', 'transmission/reception point (TRP)', or another term having an equivalent technical meaning.

The terminal 120 is a device used by a user and performs communication with the base station 110 through a wireless channel. In some cases, the terminal 120 may be operated without the user's involvement. For example, the terminal 120 which is a device performing machine type communication (MTC), may not be carried by the user. In addition to the terminal, the terminal 120 may be referred to as 'user equipment (UE)', 'mobile station', 'subscriber station', 'customer-premises equipment (CPE)', 'remote terminal', 'wireless terminal', or 'user device' or another term having an equivalent technical meaning.

The S-GW 130 provides a data bearer and creates or controls the data bearer in accordance with a control of the MME 150. For example, the S-GW 130 processes a packet arriving from the base station 110 or a packet to be forwarded to the base station 110. In addition, the S-GW 130 may serve as an anchor when handing over between base stations of the terminal 120. The P-GW 140 may function as a connection point with an external network (e.g., the Internet). In addition, the P-GW 140 assigns an Internet Protocol (IP) address to the terminal 120 and serves as an anchor for the S-GW 130. In addition, the P-GW 140 may apply a Quality of Service (QoS) policy of the terminal 120 and manage account data.

The MME 150 manages mobility of the terminal 120. In addition, the MME 150 may perform authentication, bearer management, and the like for the terminal 120. That is, the MME 150 is responsible for mobility management and various control functions for the terminal. The MME 150 may be linked with a serving GPRS support node (SGSN).

The HSS 160 stores key information and a subscriber profile for authentication of the terminal 120. The key information and the subscriber profile are transmitted from the HSS 160 to the MME 150 when the terminal 120 connects to a network.

The PCRF 170 defines a rule for a policy and charging. The stored information may be transferred from the PCRF 170 to the P-GW 140, and the P-GW 140 may perform control (e.g. QoS management, charging, and the like) for the terminal 120 based on the information provided from the PCRF 170.

A carrier aggregation (hereinafter, CA) technology is a technology that combines a plurality of component carriers and increases a frequency usage efficiency in terms of a terminal or a base station, as a terminal transmits and receives a signal using simultaneously the plurality of component carriers. Specifically, according to the CA technology, a terminal and a base station may transmit and receive a signal using a wideband by using the plurality of component carriers in an uplink (UL) and a downlink (DL), respectively. Each component carrier is located within a different frequency band. Hereinafter, the uplink refers to a communication link through which a terminal transmits a signal to a base station, and the downlink refers to a communication link through which a base station transmits a signal to a terminal. At this time, the number of uplink component carriers and downlink component carriers may be different from each other.

Dual connectivity or multi connectivity is a technology in which one terminal is connected to multiple different base stations to simultaneously transmit and receive signals using carriers in multiple base stations located in different frequency bands, thereby increasing frequency usage efficiency in terms of the terminal or base station. A terminal may be simultaneously connected to a first base station (e.g., a base station that provides a service using LTE technology or 4^{th} generation mobile communication technology) and a second base station (e.g., a base station that provides a service using new radio (NR) technology or 5^{th} generation (5G) mobile communication technology) to transmit and receive traffic. In this case, frequency resources used by each base station may be located in different bands. As described above, a method of operating based on the dual connection method of LTE and NR may be referred to as 5G non-standalone (NSA).

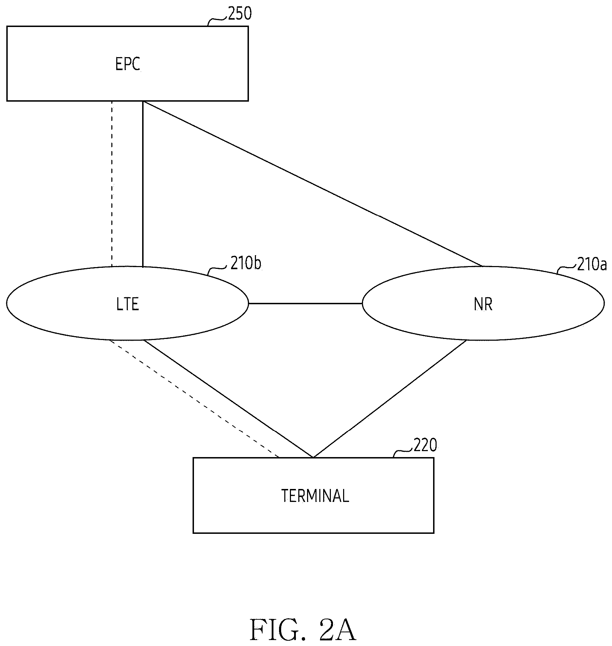

FIG. 2A illustrates an example of a 5^{th} generation (5G) non-standard alone (NSA) system.

Referring to FIG. 2A, the 5G NSA system includes an NR RAN 210a, an LTE RAN 210b, a terminal 220, and an evolved packet core (EPC) 250. The NR RAN 210a and the LTE RAN 210b may be connected to the EPC 150, and the terminal 220 may receive a service from either or both of the NR RAN 210a and the LTE RAN 210b simultaneously. The NR RAN 210a includes at least one NR base station, and the LTE RAN 210b includes at least one LTE base station. Herein, the NR base station may be referred to as a '5^{th} generation node (5G node)', 'next generation nodeB (gNB)', or another term having an equivalent technical meaning. In addition, the NR base station may have a structure separated into a central unit (CU) and a digital unit (DU), and in addition, the CU may have a structure separated into a CU-control plane (CP) unit and a CU-user plane (UP) unit.

In a structure such as FIG. 2A, the terminal 220 may perform a radio resource control (RRC) connection through a first base station (e.g., a base station belonging to the LTE RAN 210b) and may be serviced with a function (e.g., connection management, mobility management, and the like) provided in a control plane. In addition, the terminal 220 may be provided with additional radio resources for transmitting and receiving data through a second base station (e.g., a base station belonging to the NR RAN 210a). This dual connectivity technology using LTE and NR may be referred to as evolved universal terrestrial radio access (E-UTRA) - NR dual connectivity (EN-DC). Similarly, a dual connectivity technology in which the first base station uses the NR technology and the second base station uses the LTE technology is referred to as NR - E-UTRA dual connectivity (NE-DC). In addition, various embodiments may be applied to various forms of multiple connectivity and a carrier aggregation technology. In addition, various embodiments may be applied even if a first system using a first communication technology and a second system using a second communication technology are implemented in one device, or a first base station and a second base station are located in the same geographical location.

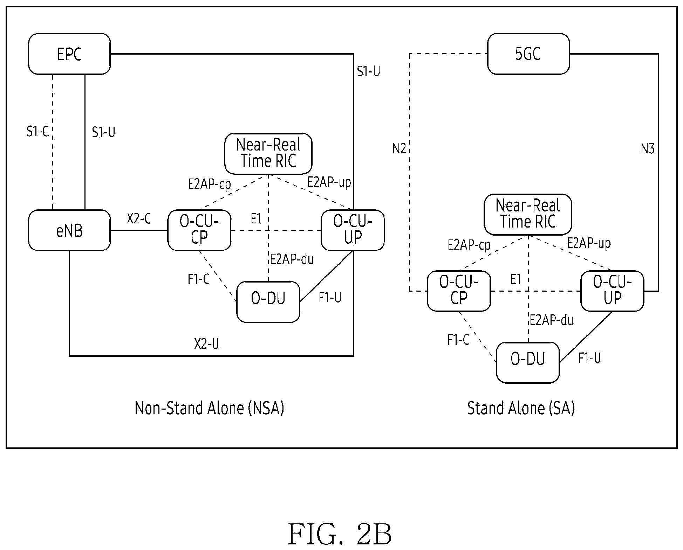

FIG. 2B illustrates an example of an architecture for an O-RAN. For the purpose of E2-SM-key performance indicator (KPI) monitoring (KPIMON) of E2 service model, an O-RAN non-stand alone mode in a multi-connectivity operation using E-UTRA and NR radio access technology is considered, and it is assumed that the E2 node is in an O-RAN stand alone mode.

Referring to FIG. 2B, in a deployment of the O-RAN non-stand alone mode, the eNB is connected to the EPC through an S1-C/S1-U interface and to the O-CU-CP through an X2 interface. For a deployment of the O-RAN standalone mode, the O-CU-CP may be connected to a 5G core (5GC) through an N2/N3 interface.

Currently, discussions are underway for the improvement and enhancement of the initial 5G mobile communication technology by considering services that 5G mobile communication technology aimed to support, and physical layer standardization is in progress for technologies such as vehicle-to-everything (V2X), which assists autonomous vehicles in driving decisions based on the vehicle's location and status information provided by the vehicle and enhances user convenience, new radio unlicensed (NR-U), which is intended for system operation that complies with various regulatory requirements in unlicensed bands, NR terminal low power consumption technology (UE Power Saving), Non-Terrestrial Network (NTN), which is a terminal-satellite direct communication for securing coverage in areas where communication with terrestrial networks is impossible, and Positioning.

Furthermore, standardization in the field of wireless interface architecture and protocols is in progress for technologies such as Industrial Internet of Things (IIoT), which supports new services through integration and convergence with other industries, Integrated Access and Backhaul (IAB), which provides nodes to expand network service areas by integrally supporting wireless backhaul links and access links, Mobility Enhancement, which includes conditional handover and dual active protocol stack (DAPS) handover, and 2-step RACH for NR, which simplifies the random access procedure, and standardization in the field of system architecture and services is also in progress for technologies such as 5G baseline architecture (e.g., Service based Architecture, Service-based Interface) for grafting network functions virtualization (NFV) and software-defined networking (SDN) technology and mobile edge computing (MEC) on which services is provided based on a location of the terminal.

When such 5G mobile communication system is commercialized, connected devices, which are increasing explosively, will be connected to the communication network, and accordingly, it is expected that the enhancement of the functions and performance of the 5G mobile communication system and the integrated operation of connected devices will be required. To this end, new research will be conducted on eXtended Reality (XR) to efficiently support augmented reality (AR), virtual reality (VR), and mixed reality (MR), 5G performance improvement and complexity reduction utilizing artificial intelligence (AI) and machine learning (ML), AI service support, metaverse service support, and drone communication.

Furthermore, the advancement of such 5G mobile communication system could serve as the foundation for the development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although FIGS. 1 to 2B illustrate 4G and/or 5G environments, this description does not limit the scope of the communication environments of the embodiments of the present disclosure. The technical principles according to the embodiments of the present disclosure may also be applied to 6G and post-6G communication technologies and network environments.

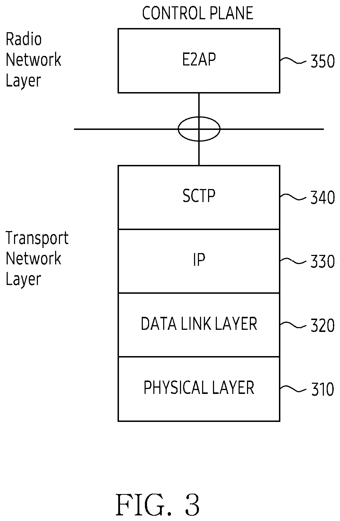

FIG. 3 illustrates a protocol stack of an E2 application protocol message in a wireless access network according to embodiments. Referring to FIG. 3, a control plane includes a transport network layer and a radio network layer. The transport network layer includes a physical layer 310, a data link layer 320, an internet protocol (IP) 330, and a stream control transmission protocol (SCTP) 340.

The wireless network layer includes E2AP 350. The E2AP 350 is used to transmit a subscription message, an indication message, a control message, a service update message, and a service query message, and they are transmitted in a higher layer of the SCTP 340 and the IP 330.

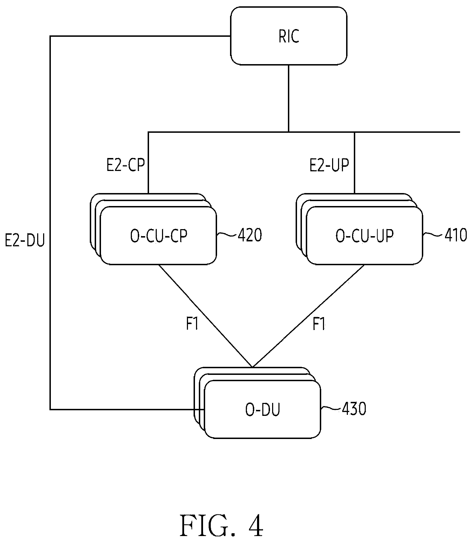

FIG. 4 illustrates an example of a connection between a base station and a radio access network intelligence controller (RIC) in a wireless access network according to embodiments.

Referring to FIG. 4, an RIC 440 is connected to O-CU-UP 410, O-CU-CP 420, and O-DU 430. The RIC 440 is a device for customizing RAN functionality for new services or regional resource optimization. The RIC 440 may provide functions such as network intelligence (e.g., policy enforcement, handover optimization), resource assurance (e.g., radio-link management, advanced self-organized-network (SON)), and resource control (e.g., load balancing, slicing policy). The RIC 440 may perform communication with O-CU-CP 420, O-CU-UP 410, O-DU 430. The RIC 440 may be connected to each node through E2-CP, E2-UP, E2-DU interfaces. In addition, an interface between O-CU-CP and DU, and between O-CU-UP and DU may be referred to as F1 interface. In the following description, DU and O-DU, CU-CP and O-CU-CP, CU-UP and O-CU-UP may be used interchangeably.

FIG. 4 illustrates one RIC 440, but a plurality of RICs may be present in various embodiments. The plurality of RICs may be implemented with a plurality of hardware located at the same physical location or may be implemented through virtualization using one hardware.

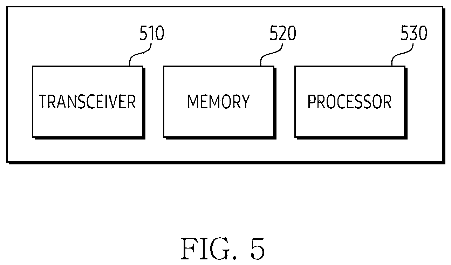

FIG. 5 illustrates a configuration of a device in a wireless access network according to embodiments. A structure exemplified in FIG. 5 may be understood as a configuration of a device having a function of at least one among the near-RT RIC, non-RT RIC, O-CU-CP, O-CU-UP, and O-DU of FIG. 4. The terms '...unit', '... device', and the like used below mean a unit processing at least one function or operation, and it may be implemented by hardware or software, or a combination of hardware and software.

Referring to FIG. 5, a core network device is configured to include a transceiver 510, memory 520, and a processor 530.

The transceiver 510 provides an interface for performing communication with other devices in a network. That is, the transceiver 510 converts a bit stream transmitted from the core network device to another device into a physical signal, and converts a physical signal received from another device into a bit stream. That is, the transceiver 510 may transmit and receive a signal. Accordingly, the transceiver 510 may be referred to as a communication unit, a modem, a transmit unit, a receive unit, or a transmit/receive unit. In this case, the transceiver 510 enables the core network device to communicate with other devices or systems via a backhaul connection (e.g., a wired backhaul or a wireless backhaul) or via a network. Although only one transceiver 510 is illustrated in FIG. 5, the device may include one or more transceivers..

The memory 520 stores data such as a basic program, an application program, and setting information for operations of the core network device. The memory 520 may be referred to as a storage unit. The memory 520 may be composed of a volatile memory, a nonvolatile memory, or a combination of a volatile memory and a nonvolatile memory. In addition, the memory 520 provides stored data according to a request of the processor 530.

The processor 530 controls overall operations of a network element (NE) device such as E2 node or Near-RT RIC. For example, the processor 530 transmits and receives signals through the transceiver 510. In addition, the processor 530 records and reads data in the memory 520. Although only one processor 530 is illustrated in FIG. 5, the device may include one or more processors. According to various embodiments, the processor 530 may control the device to perform operations according to various embodiments described in the present disclosure.

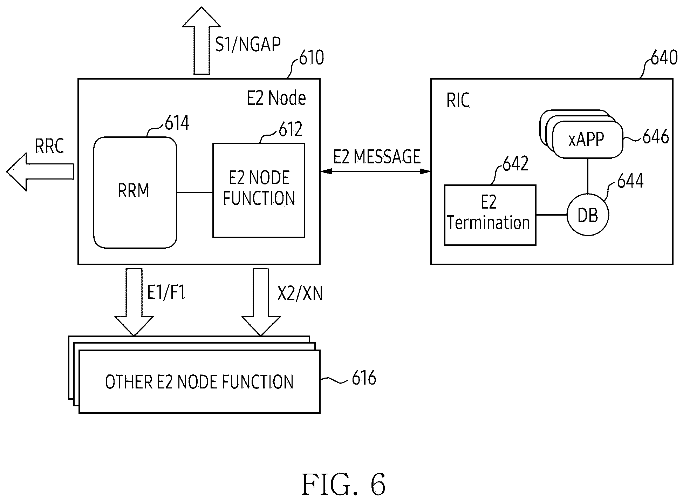

FIG. 6 illustrates a logical function related to an E2 message of an E2 node and an RIC in a wireless access network according to embodiments.

Referring to FIG. 6, an RIC 640 and an E2 node 610 may transmit or receive an E2 message between each other. For example, the E2 node 610 may be O-CU-CP, O-CU-UP, O-DU, or a base station. A communication interface of the E2 node may be determined according to a type of the E2 node 610. For example, the E2 node 610 may communicate with another E2 node 616 through an E1 interface or an F1 interface. In addition, for example, the E2 node 610 may communicate with the E2 node 616 through an X2 interface or an XN interface. In addition, for example, the E2 node 610 may perform communication through an S1 interface or a next generation application protocol (NGAP) interface (i.e., an interface between a next generation (NG) RAN node and the AMF).

The E2 node 610 may include an E2 node function 612. The E2 node function 612 corresponds to a specific application S/W (xApp) 646 installed in the RIC 640. For example, in a case of a KPI monitor, a KPI monitor collection S/W is installed in the RIC 640, and the E2 node 610 may include an E2 node function 612 that generates KPI parameters and then transmits an E2 message including the KPI parameter to an E2 termination 642 located in the RIC 640. The E2 node 610 may include a radio resource management (RRM) 614. The E2 node 610 may manage resources provided to a wireless network for a terminal. The xApp 646 is an application designed to be executed on the RIC 640 (e.g., Near-RT RIC). The application may be composed of one or more microservices and may identify data consumed at an onboarding timing and data provided. The application is independent of the RIC 640 and may be provided at a third party. The E2 interface enables a direct connection between the xApp 646 and the RAN function.

The E2 termination 642 located in the RIC 640 is a termination of the RIC 640 for the E2 message, and performs a function of interpreting the E2 message transmitted (or transferred) by the E2 node 610 and then transmitting the E2 message to the xApp 646. A database DB 644 located in the RIC 640 may be used for the E2 termination 642 or the xApp 646. The E2 node 610 illustrated in FIG. 6 is a termination of at least one interface and may be understood as a termination of messages transmitted to a terminal, a peripheral base station, and a core network.

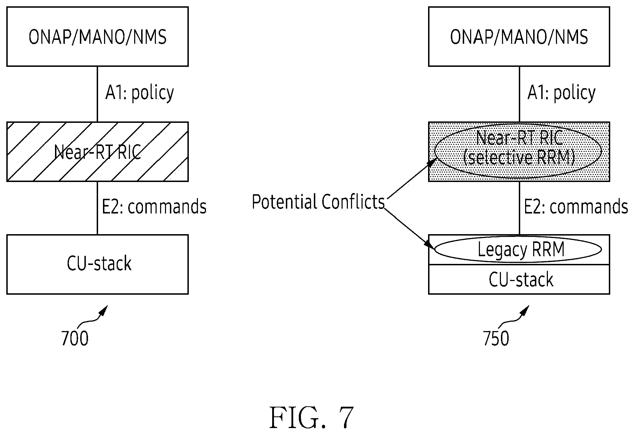

FIG. 7 illustrates examples of a function split between an E2 node and an RIC according to embodiments. O-RAN standard provides a function split between an E2 node and an RIC. For example, the E2 node may be a CU. The RIC may be a Near RT RIC. The RIC may be connected to open network automation platform (ONAP)/management and orchestration (MANO)/network management system (NMS) through the A1 interface. The RIC may be connected to the E2 node through an E2 interface. The E2 interface may transmit commands. A function split option may include a function split 700 that manages the entire radio resource management (RRM) in the near-RT RIC and a function split 750 that selectively manages the RRM in the near-RT RIC.

According to the WG3 decision of the meeting on 2019/01/16, the Near-RT RIC is expected to support an E2 as an open logical interface aimed at a multi-vendor environment, regardless of the implementation of a specific RRC-RRM algorithm located in the Near-RT RIC. In the present disclosure, E2 Service Model Radio Interface Control (E2SM-RIC), which is paired with E2SM-NI capable of performing injection/modification/configuration of Per UE RRC messages for each I/F and network entity (NE), may be proposed. In other words, in the function split 750, the Near-RT RIC may be gradually improved in a direction of the function split 700. The E2 may evolve into an open logical interface, which is independent of the implementation of a specific RRC-RRM algorithm in the Near-RT RIC while targeting a multi-vendor environment.

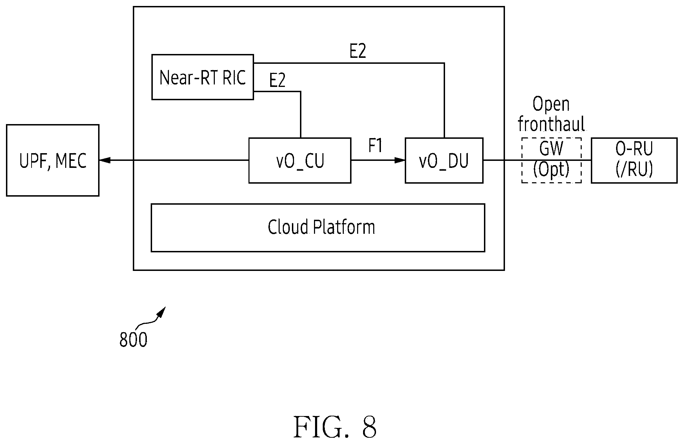

FIG. 8 illustrates an implementation example of an E2 node and an RIC according to embodiments. In a scenario of an implementation example 800, an E2 node (e.g., the O-DU 820, the O-CU 830) and an RIC 810 may be virtualized on a cloud platform 840 (e.g., an open chassis and blade specification edge cloud) and configured on a device (e.g., a server). Such a scenario may support a deployment in dense urban areas with abundant fronthaul capacity that allows a BBU function to be pooled at a central location, with low latency enough to meet O-DU latency requirements. In an embodiment, there may be no need to attempt to centralize the Near-RT RIC beyond the limit of centralizing O-DU function. According to an embodiment, E2SM-RIC may be optimized for an O-RAN deployment scenario in which Near-RT RIC, O-CU, and O-DU are implemented on an O-Cloud platform.

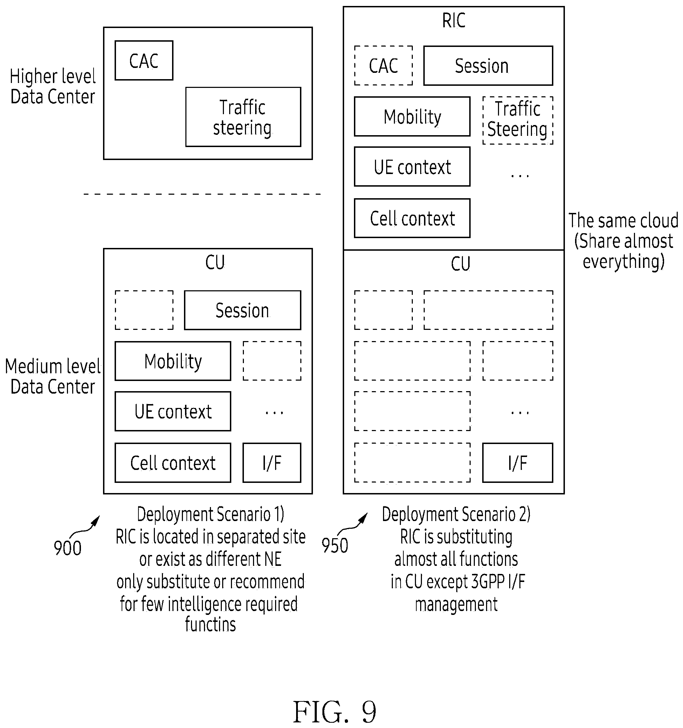

FIG. 9 illustrates examples of function split between a centralized unit (CU) 910 and an RIC 920 according to embodiments. Referring to FIG. 9, function splits may be performed according to a deployment scenario #1 900 or a function deployment scenario #2 950.

The deployment scenario #1 900: RIC is located at a separate site or exists only as another NE, replacing or recommending some intelligence critical functions.

The deployment scenario #2 950: RIC may replace almost all functions of the CU except 3GPP I/F management.

In FIG. 9, two scenarios are illustrated, but other scenarios may be applied. As an example, in the deployment scenario #1 900, a Mobility function may be performed by the RIC 920 rather than the CU 910. In addition, as an example, in the deployment scenario #1 900, a UE context function may be performed by the RIC rather than the CU. In addition, as an example, in the deployment scenario #1 900, a session setup function may be performed by the RIC 920 rather than the CU 910.

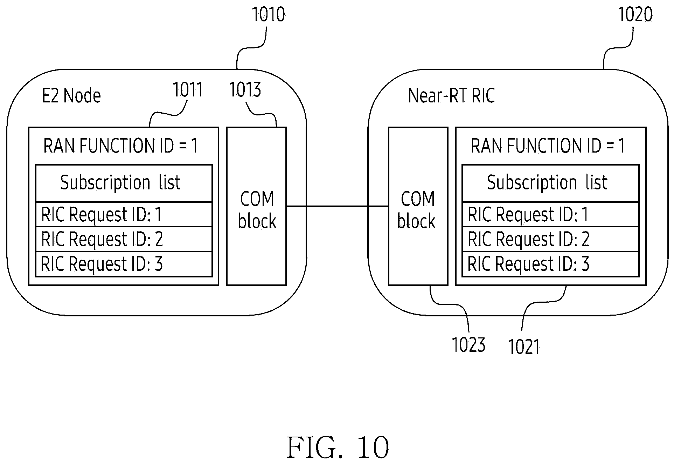

FIG. 10 illustrates a functional block of each of a Near-RT RIC and an E2 node according to a subscription procedure, according to embodiments. The subscription procedure refers to a RIC subscription procedure. The RIC subscription procedure may be used to establish E2 subscriptions consisting of an event trigger and a sequence of actions. The O-RAN Working Group (WG) 3 Near-Real-time RAN Intelligent Controller Architecture & E2 General Aspects and Principles (E2GAP) standard defines a Near-RT RIC as a service consumer and an E2 node as a service producer. The Near-RT RIC may perform the RIC subscription procedure to receive a service. In the standard, for the RIC subscription procedure, the Near-RT RIC is stipulated to transmit RIC subscription request message. An E2 node 1010 of FIG. 10 exemplifies an E2 node (e.g., the E2 node 610) described through FIGS. 1 to 9. A Near-RT RIC 1020 of FIG. 10 exemplifies an RIC (e.g., the RIC 640) described through FIGS. 1 to 9.

The Near-RT RIC 1020 may transmit a RIC subscription request message (e.g., a RIC SUBSCRIPTION REQUEST message) to the E2 node 1010. The RIC subscription request message may include information on RAN functions. The E2 node 1010 may transmit a RIC subscription response message (e.g., a RIC SUBSCRIPTION RESPONSE message) to the Near-RT RIC 1020. If there is no error in the RIC subscription request message and an RAN function of the RIC subscription request message is supportable, the E2 node 1010 may transmit a RIC subscription response message to the Near-RT RIC 1020. If the E2 node 1010 does not allow at least one requested action, or detects an inconsistency in the sequence of actions and/or action definitions, or a failure occurs during the RIC subscription procedure, the E2 node 1010 may transmit a RIC subscription failure message (e.g., a RIC SUBSCRIPTION FAILURE message) to the Near-RT RIC 1020.

The subscription request message transmitted from the Near-RT RIC 1020 to the E2 node 1010 may include a RAN function and an event trigger definition related to the RAN function. For example, a structure of the subscription request message is as shown in the table below.

**[Table 1]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscription Details | M | | | | YES | reject |
| >RIC Event Trigger Definition | M | | 9.2.9 | | - | |
| >Sequence of Actions | | 1.. <maxofRICactionID> | | | EACH | ignore |
| >>RIC Action ID | M | | 9.2.10 | | - | |
| >>RIC Action Type | M | | 9.2.11 | | - | |
| >>RIC Action Definition | O | | 9.2.12 | | - | |
| >>RIC Subsequent Action | O | | 9.2.13 | | - | |

As another example, a structure of the subscription request message is as shown in the table below.

**[Table 2]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function List | | 1..<maxofRANFunctionID> | | | | |
| > RAN Function ID | M | | 9.2.8 | | YES | reject |
| > RIC Subscription Details | M | | | | YES | reject |
| >>RIC Event Trigger Definition | M | | 9.2.9 | | - | |
| >>Sequence of Actions | | 1.. <maxofRICactionID> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC | O | | 9.2.13 | | - | |
| Subsequent Action | | | | | | |

As another example, a structure of the subscription request message is as shown in the table below.

**[Table 3]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscription Details | M | | | | YES | reject |
| >RIC Event Trigger Definition List | | 1..<maxnoofRICStyles> | | | | |
| >>RIC Event Trigger Definition | M | | 9.2.9 | | - | |
| >>Sequence of Actions | | 1.. <maxofRICactionID> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC Subsequent Action | O | | 9.2.13 | | - | |

As another example, a structure of the subscription request message is as shown in the table below.

**[Table 4]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function List | | 1..<maxofRANFunctionID> | | | | |
| > RAN Function ID | M | | 9.2.8 | | YES | reject |
| > RIC Subscription Details | M | | | | YES | reject |
| >>RIC Event Trigger Definition List | | 1..<maxnoofRICStyles> | | | | |
| >>>RIC Event Trigger Definition | M | | 9.2.9 | | - | |
| >>>Sequence of Actions | | 1.. <maxofRICactionID> | | | EACH | ignore |
| >>>>RIC Action ID | M | | 9.2.10 | | - | |
| >>>>RIC Action Type | M | | 9.2.11 | | - | |
| >>>>RIC Action Definition | O | | 9.2.12 | | - | |
| >>>>RIC | O | | 9.2.13 | | - | |
| Subsequent Action | | | | | | |

An E2 setup procedure may be performed between the E2 node 1010 and the Near-RT RIC 1020. In the E2 setup procedure, the E2 node 1010 may transmit an E2 setup request (E2 SETUP REQUEST) message to the Near-RT RIC 1020. The Near-RT RIC 1020 may transmit an E2 setup response (E2 SETUP RESPONSE) message to the E2 node 1010. The E2 setup request message of the E2 setup procedure may include RAN function identifiers (IDs). The E2 setup request message may include a RAN Function Definition corresponding to RAN function corresponding to each RAN Function ID. The RAN Function Definition may include a description of the RAN function. The RAN function may be specific to the E2 service model. Subsequently, in the procedure, the RAN function may be indicated via the RAN Function ID. After the E2 Setup procedure, a subscription procedure may be performed for service provision.

Referring to FIG. 10, by the subscription procedure, the Near-RT RIC 1020 may subscribe to a service provided by the E2 node 1010. The Near-RT RIC 1020 may subscribe to a service corresponding to a RAN function ID. The Near-RT RIC 1020 may store a plurality of subscriptions corresponding to the RAN function ID. Each subscription may correspond to one RIC Request ID. The RIC Request ID is a local identifier used by the Near-RT RIC 1020 to identify a specific RIC subscription procedure. For example, the E2 node 1010, which is a service producer, may store information on three subscriptions (e.g., RIC Request ID 1, 2, 3) in a RAN function ID (e.g., RAN FUNCTION ID=1) (1011). The E2 node 1010 may perform one or more subscription procedures with a communication block 1023 of the Near-RT RIC 1020 through a communication block 1013. The Near-RT RIC 1020 may obtain information on three subscriptions (e.g., RIC Request ID 1, 2, 3) in a RAN function ID (e.g., RAN FUNCTION ID=1) (1013).

A network element (NE) such as the E2 node 1010 or the Near-RT RIC 1020 may be implemented by hardware or implemented in the cloud via software. A software functional block corresponding to the E2 node 1010 may operate via the cloud as shown in FIG. 8. The E2 node 1010 may store subscription information in a database (DB). In the same way, a functional block (e.g., subscription manager of the Near-RT RIC 1020) corresponding to the Near-RT RIC 1020 may operate via the cloud. The Near-RT RIC 1020 may store subscription information in a database.

It is assumed that a functional block corresponding to the E2 node 1010 is turned OFF and then turned ON again. The E2 node 1010 may obtain the stored subscription information. If a procedure between the Near-RT RIC 1020 and the E2 node 1010 is in progress while the E2 node 1010 is turned OFF, a mismatch may occur between the subscription information of the E2 node 1010 and the subscription information of the Near-RT RIC 1020. In the same way, even when the functional block (e.g., subscription manager of the Near-RT RIC 1020) corresponding to the Near-RT RIC 1020 is turned OFF and then turned ON again, a mismatch may occur between the subscription information of the E2 node 1010 and the subscription information of the Near-RT RIC 1020. If the mismatch occurs, the E2 node 1010 or the Near-RT RIC 1020 may perform a reset procedure or an E2 setup procedure again. However, after the E2 setup procedure, procedures performing repeatedly RIC subscriptions again may act as an overhead for resources on the E2 interface.

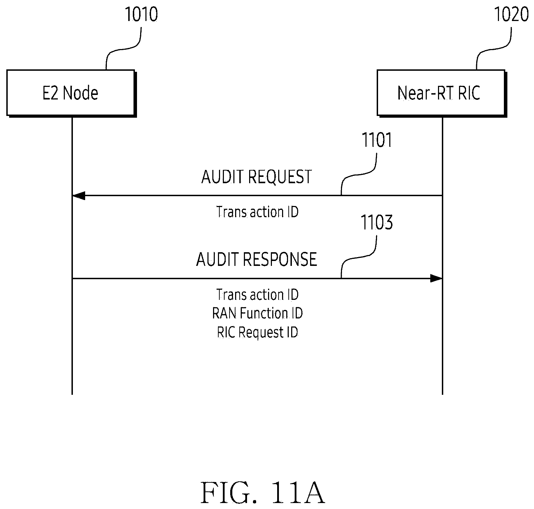

In order to resolve the above-described mismatch, in other words, to compare a subscription status of the E2 node 1010 with a subscription status of the Near-RT RIC 1020, the E2 node 1010 may initiate a subscription audit procedure. The audit procedure initiated by the E2 node 1010 is described in detail through FIG. 11A. Similarly, the Near-RT RIC 1020 may initiate a subscription audit procedure to compare the subscription status of the Near-RT RIC 1020 with the subscription status of the E2 node 1010. The subscription procedure initiated by the Near-RT RIC 1020 is described in detail through FIG. 11A.

FIG. 11A illustrates an example of a subscription audit procedure between a Near-RT RIC and an E2 node according to an embodiment.

Referring to FIG. 11A, in operation 1101, the Near-RT RIC 1020 may transmit an audit request message to the E2 node 1010. The audit request message may include an ID (e.g., a transaction ID) for identifying an audit procedure. For example, the transaction ID may uniquely identify a procedure among all ongoing parallel procedures of the same type initiated by the same protocol peer. Messages belonging to the same procedure may use the same transaction ID. The transaction ID may be determined by an initiating peer of the procedure. In FIG. 11A, the transaction ID may be determined by the Near-RT RIC 1020. For example, the audit request message may have a format as shown in the table below.

**[Table 5]**

| **IE/Group Name** | **Presence** | **Range** | **IE type and reference** |
|---|---|---|---|
| Message Type | M | | 9.2.3 |
| Transaction ID | M | | 9.2.33 |

'M' represents 'mandatory', and 'O' represents 'optional'.

In operation 1103, the E2 node 1010 may transmit an audit response message to the Near-RT RIC 1020. The audit response message may include an ID (e.g., a transaction ID) for identifying the audit procedure, an RAN function ID (e.g., the RIC Function ID of Tables 1 to 4), and an RIC request ID (e.g., the RIC Request ID of Tables 1 to 4). The audit response message may be a response to the audit request message. According to an embodiment, the audit response message may include a transaction ID of the audit request message. The RAN function ID and the RIC request ID may be used to identify the subscription procedure. According to an embodiment, the audit response message may include one or more subscription information. Each subscription information may correspond to a subscription procedure. Each subscription information may include the RAN function ID and the RIC request ID. The audit response message may include a set of RAN function ID and RIC request ID. For example, the audit response message may have a format as shown in the table below.

**[Table 6]**

| **IE/Group Name** | **Presence** | **Range** | **IE type and reference** |
|---|---|---|---|
| Message Type | M | | 9.2.3 |
| Transaction ID | M | | 9.2.33 |
| Subscription List | | 1 | |
| >Subscription Item | | 0..<maxofRICRequestID> | |
| >>RIC Request ID | M | | 9.2.7 |
| >>RAN Function ID | M | | 9.2.8 |

'M' represents 'mandatory', and 'O' represents 'optional'. 'maxofRICRequestID' may mean the maximum number of RIC subscription requests to the E2 node 1010, supported by the Near-RT RIC 1020. For example, 'maxofRICRequestID' may be 1024. IEs for 'Message Type' in Tables 5 and 6 may have a format as shown in the table below.

**[Table 7]**

| **IE/Group Name** | **Presence** | **Range** | **IE type and reference** | **Semantics description** |
|---|---|---|---|---|
| Message Type | | | | |
| >Procedure Code | M | | | |
| >Type of Message | M | | CHOICE (Initiating Message, Successful Outcome, Unsuccessful Outcome, ...) | |

'M' represents 'mandatory', and 'O' represents 'optional'.

The Near-RT RIC 1020 may obtain a subscription status related to the E2 node 1010 by performing audit request. The Near-RT RIC 1020 may compare subscription information of the E2 node 1010 and subscription information of the Near-RT RIC 1020 through an audit response message. If a mismatch occurs in the comparison result, the Near-RT RIC 1020 may delete the subscription information due to the mismatch or perform a delete request procedure. According to an embodiment, the Near-RT RIC 1020 may delete subscription information of the Near-RT RIC 1020 that does not match the subscription information of the E2 node 1010 in the internal block. In addition, according to an embodiment, the Near-RT RIC 1020 may transmit, to the E2 node 1010, a request message for deletion of specific subscription information. According to an additional embodiment, the Near-RT RIC 1020 may perform a RIC subscription procedure corresponding to the deleted RIC subscription information.

According to an embodiment, the Near-RT RIC 1020 may transmit, to the E2 node 1010, the audit request message to indicate which subscription information to request. For example, the audit request message may include one or more subscription information. Each subscription information may correspond to a subscription procedure. Each subscription information may include a RAN function ID and/or a RIC request ID. For example, the audit request message may have a format as shown in the table below.

**[Table 8]**

| **IE/Group Name** | **Presence** | **Range** | **IE type and reference** |
|---|---|---|---|
| Message Type | M | | 9.2.3 |
| Transaction ID | M | | 9.2.33 |
| RIC subscription List | | 1 | |
| RIC subscription Item | | 0.. <maxofRICRequestID> | |
| >RIC Request ID | M | | 9.2.7 |
| >>RAN Function ID | M | | 9.2.8 |
| >>RAN Function Revision | M | | 9.2.24 |

The 'RIC subscription List' IE may indicate a list of RIC subscription(s) for requesting a subscription audit. The 'RIC Request ID' IE may indicate a RIC request ID. The 'RAN Function ID' IE may indicate a RAN function ID. The 'RAN Function Revision' IE may indicate a revision counter. Although described as 'M' in the above table, the 'RAN Function Revision' IE may be omitted.

The E2 node 1010 may transmit a subscription response message to the Near-RT RIC 1020, in response to the subscription request message of the Near-RT RIC 1020. The subscription response message may include a response result for the requested subscription information. For example, the subscription response message may include subscription information mapped in the E2 node 1010. In addition, for example, the subscription response message may include unknown subscription information indicating subscriptions that have not been confirmed in the E2 node 1010. In addition, for example, the subscription response message may include subscription information that is missing in the E2 node 1010. For example, the audit response message may have a format as shown in the table below.

**[Table 9]**

| **IE/Group Name** | **Presence** | **Range** | **IE type and reference** |
|---|---|---|---|
| Message Type | M | | 9.2.3 |
| Transaction ID | M | | 9.2.33 |
| Mapped Subscription List | | 1 | |
| >Subscription Item | | 0..<maxofRICRequestID> | |
| >>RIC Request ID | M | | 9.2.7 |
| >>RAN Function ID | M | | 9.2.8 |
| Unknown Subscription List | | 0..1 | |
| >Subscription Item | | 0..<maxofRICRequestID> | |
| >>RIC Request ID | M | | 9.2.7 |
| >>RAN Function ID | M | | 9.2.8 |
| Missed Subscription List | | 0..1 | |
| >Subscription Item | | 0..<maxofRICRequestID> | |
| >>RIC Request ID | M | | 9.2.7 |
| >>RAN Function ID | M | | 9.2.8 |

The 'Mapped Subscription List' IE may indicate the mapped subscription information. Herein, the mapped subscription information may indicate subscriptions for which mapping to a RAN function ID and a RIC request ID has been confirmed in the E2 node 1010, among the subscriptions for which an audit has been requested. The 'Unknown Subscription List' IE may indicate the unknown subscription information. The unknown subscription information may indicate subscriptions that are difficult to confirm because they are not stored in the E2 node 1010, among the subscriptions for which an audit has been requested. The E2 node 1010 may transmit, to the Near-RT RIC 1020, a subscription response message including a RAN function ID and a RIC request ID for each subscription that is difficult to confirm. The 'Missed Subscription List' IE may indicate the missed subscription information. The missed subscription information may indicate subscriptions that are incorrect because the information stored in the E2 node 1010 and the requested information are different, among the subscriptions for which an audit has been requested. For example, the E2 node 1010 may compare the subscription information of the E2 node 1010 with the subscription information of the Near-RT RIC 1020, and transmit a subscription response message including the subscription information of the subscription where the mismatch occurred to the Near-RT RIC 1020. The subscription information may include the RAN function ID and RIC request ID for each subscription that is inconsistent.

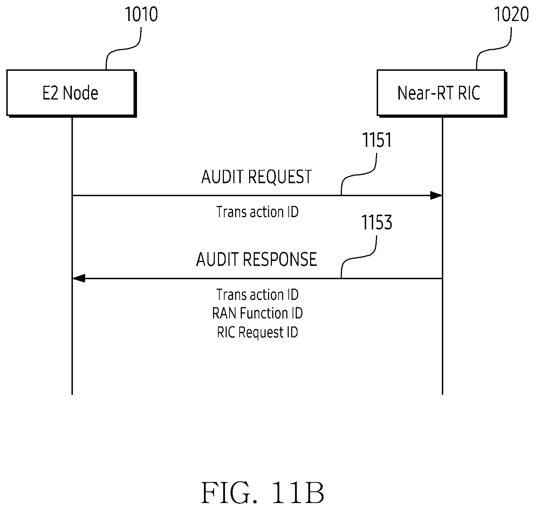

FIG. 11B illustrates an example of a subscription audit procedure between a Near-RT RIC and an E2 node according to an embodiment.

Referring to FIG. 11B, in operation 1151, the E2 node 1010 may transmit an audit request message to the Near-RT RIC 1020. The audit request message may include an ID (e.g., a transaction ID) for identifying an audit procedure. For example, the transaction ID may uniquely identify a procedure among all ongoing parallel procedures of the same type initiated by the same protocol peer. Messages belonging to the same procedure may use the same transaction ID. The transaction ID may be determined by the initiating peer of the procedure. In FIG. 11A, the transaction ID may be determined by the E2 node 1010. For example, the audit request message may have a format as shown in the table below.

**[Table 10]**

| **IE/Group Name** | **Presence** | **Range** | **IE type and reference** |
|---|---|---|---|
| Message Type | M | | 9.2.3 |
| Transaction ID | M | | 9.2.33 |

'M' represents 'mandatory', and 'O' represents 'optional'.

In operation 1153, the Near-RT RIC 1020 may transmit an audit response message to the E2 node 1010. The audit response message may include an ID (e.g., a transaction ID) for identifying the audit procedure, an RAN function ID (e.g., the RIC Function ID of Tables 1 to 4), and an RIC request ID (e.g., the RIC Request ID of Tables 1 to 4). The audit response message may be a response to the audit request message. According to an embodiment, the audit response message may include a transaction ID of the audit request message. The RAN function ID and the RIC request ID may be used to identify the subscription procedure. According to an embodiment, the audit response message may include one or more subscription information. Each subscription information may correspond to a subscription procedure. Each subscription information may include the RAN function ID and the RIC request ID. The audit response message may include a set of RAN function ID and RIC request ID. For example, the audit response message may have a format as shown in the table below.

**[Table 11]**

| **IE/Group Name** | **Presence** | **Range** | **IE type and reference** |
|---|---|---|---|
| Message Type | M | | 9.2.3 |
| Transaction ID | M | | 9.2.33 |
| Subscription List | | 1 | |
| >Subscription Item | | 0..<maxofRICRequestID> | |
| >>RIC Request ID | M | | 9.2.7 |
| >>RAN Function ID | M | | 9.2.8 |

'M' represents 'mandatory', and 'O' represents 'optional'. 'maxofRICRequestID' may mean the maximum number of RIC subscription requests to the E2 node 1010, supported by the Near-RT RIC 1020. For example, 'maxofRICRequestID' may be 1024. The IE for 'Message Type' in Tables 8 and 9 may have a format as shown in Table 7.

The E2 node 1010 may obtain a subscription status of the Near-RT RIC 1020 by performing an audit request. The E2 node 1010 may compare the subscription information of the E2 node 1010 with the subscription information of the Near-RT RIC 1020 through an audit response message from the Near-RT RIC 1020. If a mismatch occurs in the comparison result, the E2 node 1010 may delete the subscription information due to the mismatch or perform a delete required procedure. According to an embodiment, the E2 node 1010 may delete the subscription information of the E2 node 1010 that does not match the subscription information of the Near-RT RIC 1020 in the internal block. Additionally, according to an embodiment, the E2 node 1010 may transmit a delete required message to the Near-RT RIC 1020 to request deletion of RIC subscription(s) existing in the E2 node 1010. According to an additional embodiment, the Near-RT RIC 1020 may perform a RIC subscription procedure corresponding to the deleted RIC subscription information.

According to an embodiment, the E2 node 1010 may transmit, to the Near-RT RIC 1020, the audit request message to indicate which subscription information to request. For example, the audit request message may include one or more subscription information. Each subscription information may correspond to a subscription procedure. Each subscription information may include a RAN function ID and/or a RIC request ID. For example, the audit request message may have a format as shown in the table below.

**[Table 12]**

| **IE/Group Name** | **Presence** | **Range** | **IE type and reference** |
|---|---|---|---|
| Message Type | M | | 9.2.3 |
| Transaction ID | M | | 9.2.33 |
| RIC subscription List | | 1 | |
| > RIC subscription Item | | 0.. <maxofRICRequestID> | |
| >>RIC Request ID | M | | 9.2.7 |
| >>RAN Function ID | M | | 9.2.8 |
| >>RAN Function Revision | M | | 9.2.24 |

The 'RIC subscription List' IE may indicate a list of RIC subscription(s) for requesting a subscription audit. The 'RIC Request ID' IE may indicate a RIC request ID. The 'RAN Function ID' IE may indicate a RAN function ID. The 'RAN Function Revision' IE may indicate a revision counter. Although described as 'M' in the table above, the 'RAN Function Revision' IE may be omitted.

The Near-RT RIC 1020 may transmit, to the E2 node 1010, a subscription response message, in response to the subscription request message of the E2 node 1010. The subscription response message may include a response result for the requested subscription information. For example, the subscription response message may include subscription information mapped in the Near-RT RIC 1020. In addition, for example, the subscription response message may include unknown subscription information indicating subscriptions that have not been confirmed in the Near-RT RIC 1020. In addition, for example, the subscription response message may include subscription information that is missing in the Near-RT RIC 1020. For example, the audit response message may have a format as shown in the table below.

**[Table 13]**

| **IE/Group Name** | **Presence** | **Range** | **IE type and reference** |
|---|---|---|---|
| Message Type | M | | 9.2.3 |
| Transaction ID | M | | 9.2.33 |
| Mapped Subscription List | | 1 | |
| >Subscription Item | | 0..<maxofRICRequestID> | |
| >>RIC Request ID | M | | 9.2.7 |
| >>RAN Function ID | M | | 9.2.8 |
| Unknown Subscription List | | 0..1 | |
| >Subscription Item | | 0..<maxofRICRequestID> | |
| >>RIC Request ID | M | | 9.2.7 |
| >>RAN Function ID | M | | 9.2.8 |
| Missed Subscription List | | 0..1 | |
| >Subscription Item | | 0..<maxofRICRequestID> | |
| >>RIC Request ID | M | | 9.2.7 |
| >>RAN Function ID | M | | 9.2.8 |

The 'Mapped Subscription List' IE may indicate the mapped subscription information. Herein, the mapped subscription information may indicate subscriptions for which the mapping to the RAN function ID and the RIC request ID is confirmed in the Near-RT RIC 1020, among the subscriptions for which an audit has been requested. The 'Unknown Subscription List' IE may indicate the unknown subscription information. The unknown subscription information may indicate subscriptions that are difficult to confirm because they are not stored in the Near-RT RIC 1020, among the subscriptions for which an audit has been requested. The Near-RT RIC 1020 may transmit, to the E2 node 1010, a subscription response message including a RAN function ID and a RIC request ID for each subscription that is difficult to confirm. The 'Missed Subscription List' IE may indicate the missed subscription information. The missed subscription information may indicate subscriptions that are incorrect because the information stored in the Near-RT RIC 1020 and the requested information are different, among the subscriptions for which an audit has been requested. For example, the Near-RT RIC 1020 may compare the subscription information of the Near-RT RIC 1020 with the subscription information of the E2 node 1010, and may transmit a subscription response message including the subscription information of the subscription where the mismatch occurred to the E2 node 1010. The subscription information may include the RAN function ID and the RIC request ID for each subscription that is inconsistent.

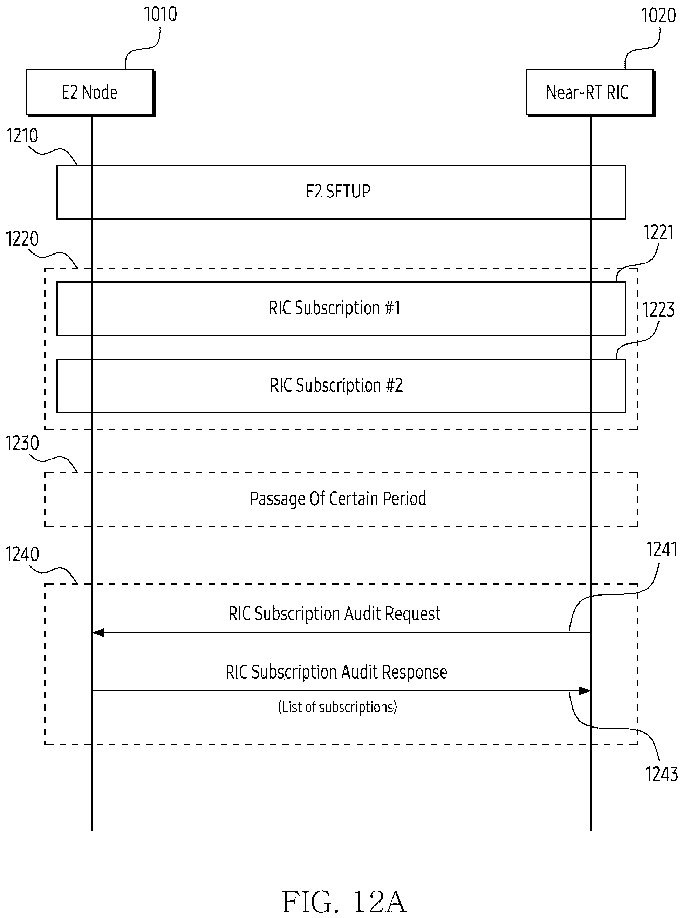

FIG. 12A illustrates an example of a subscription audit procedure initiated by an activity time according to an embodiment. The activity time may mean a period of periodic signaling or a length of a timer indicating inactivity.

Referring to FIG. 12A, at step 1210, an E2 setup procedure may be performed. The E2 node 1010 may transmit an E2 setup request message to the Near-RT RIC 1020. The Near-RT RIC 1020 may receive an E2 setup response message from the E2 node 1010. Through the E2 setup procedure, one or more RAN functions may be configured in the E2 node 1010.

In step 1220, one or more RIC subscription procedures may be performed. The Near-RT RIC 1020 may subscribe to a service corresponding to a RAN function through the RIC subscription procedure. For example, the Near-RT RIC 1020 may perform a first RIC subscription procedure 1221 with the E2 node 1010. The Near-RT RIC 1020 may transmit, to the E2 node 1010, a subscription request message including a first RAN ID and a first RIC request ID. The Near-RT RIC 1020 may receive a subscription response message from the E2 node 1010. The subscription response message may include the first RAN ID and the first RIC request ID. The Near-RT RIC 1020 may perform a second RIC subscription procedure 1223 with the E2 node 1010. The Near-RT RIC 1020 may transmit, to the E2 node 1010, a subscription request message including a second RAN ID and a second RIC request ID. The Near-RT RIC 1020 may receive a subscription response message from the E2 node 1010. The subscription response message may include the second RAN ID and the second RIC request ID.

In step 1230, a specified time may elapse from the most recently performed signaling. In order to achieve stable synchronization for RIC subscriptions, if there has been no signaling for a certain period, a RIC subscription audit procedure may be performed. The most recently performed signaling may include the last transmitted or received message among the entire procedures related to RIC subscriptions. According to an embodiment, the Near-RT RIC 1020 may periodically perform a RIC subscription audit procedure. That is, the Near-RT RIC 1020 may identify that the specified time (e.g., timer) has elapsed after transmitting the last RIC subscription audit request message. The Near-RT RIC 1020 may start a timer when transmitting the audit request message. Additionally, according to an embodiment, the Near-RT RIC 1020 may be configured to perform periodic reporting. The E2 node 1010 may identify that the specified time has elapsed since the last report of the Near-RT RIC 1020. The E2 node 1010 may trigger a RIC subscription audit procedure. Additionally, according to an embodiment, the E2 node 1010 may utilize a timer for an operation time. The E2 node 1010 may start the timer when receiving a message. For example, the E2 node 1010 may restart the timer whenever it receives a message. The E2 node 1010 may trigger a RIC subscription audit procedure when the timer elapses. As another example, the Near-RT RIC 1020 may stop the timer and terminate the audit procedure upon receiving an audit response message for the audit request message.

In step 1240, a RIC subscription audit procedure may be performed. The E2 node 1010 may initiate the RIC subscription audit procedure, based on identifying that a specified time has elapsed from a signaling. In operation 1241, the E2 node 1010 may transmit a RIC subscription audit request message to the Near-RT RIC 1020. For the RIC subscription audit request message, Table 5, Table 8, Table 10, or Table 12 may be referred to. In operation 1243, the Near-RT RIC 1020 may transmit a RIC subscription audit response message to the E2 node 1010. For the RIC subscription audit response message, Table 6, Table 9, Table 11, or Table 13 may be referred to. According to an embodiment, the RIC subscription audit response message may include information (e.g., RIC subscription list) related to one or more RIC subscriptions. For example, the RIC subscription audit response message may include a first RAN function ID and a first RIC request ID of a first RIC subscription procedure 1221 and a second RAN function ID and a second RIC request ID of a second RIC subscription procedure 1223.

A subscription audit procedure initiated by the E2 node 1010 is exemplified In FIG. 12A, but embodiments of the present disclosure are not limited thereto. According to an embodiment, the Near-RT RIC 1020 may initiate a subscription audit procedure, based on identifying that a certain period has elapsed. For example, the Near-RT RIC 1020 that has not received a RIC indication for the certain period may initiate a subscription audit procedure.

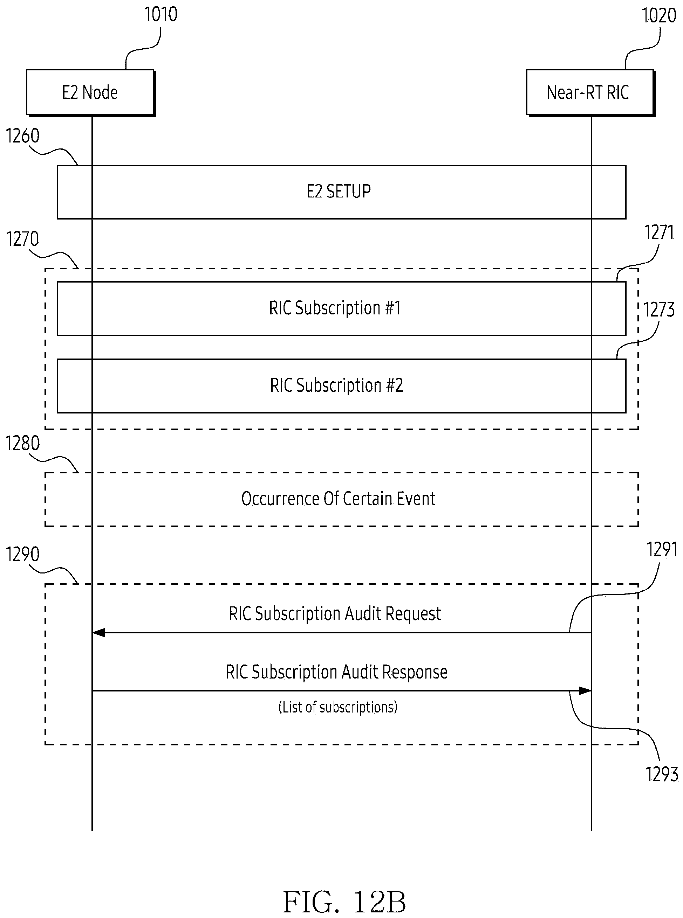

FIG. 12B illustrates an example of a subscription audit procedure initiated based on an event according to an embodiment.

Referring to FIG. 12B, in step 1260, an E2 setup procedure may be performed. The E2 node 1010 may transmit an E2 setup request message to the Near-RT RIC 1020. The Near-RT RIC 1020 may receive an E2 setup response message from the E2 node 1010. Through the E2 setup procedure, one or more RAN functions may be configured in the E2 node 1010.

In step 1270, one or more RIC subscription procedures may be performed. The Near-RT RIC 1020 may subscribe to a service corresponding to a RAN function through the RIC subscription procedure. For example, the Near-RT RIC 1020 may perform a first RIC subscription procedure 1271 with the E2 node 1010. The Near-RT RIC 1020 may transmit, to the E2 node 1010, a subscription request message including a first RAN ID and a first RIC request ID. The Near-RT RIC 1020 may receive a subscription response message from the E2 node 1010. The subscription response message may include the first RAN ID and the first RIC request ID. The Near-RT RIC 1020 may perform a second RIC subscription procedure 1273 with the E2 node 1010. The Near-RT RIC 1020 may transmit, to the E2 node 1010, a subscription request message including a second RAN ID and a second RIC request ID. The Near-RT RIC 1020 may receive a subscription response message from the E2 node 1010. The subscription response message may include the second RAN ID and the second RIC request ID.

In step 1230, a specific event may occur. The specific event may include satisfaction of a condition for triggering a RIC subscription audit procedure. According to an embodiment, the Near-RT RIC 1020 may identify the specific event. For example, the Near-RT RIC 1020 may identify that at least one functional block of the Near-RT RIC 1020 has changed from an inactive state to an active state. The Near-RT RIC 1020 may initiate a subscription audit procedure instead of a reset procedure. In addition, for example, the Near-RT RIC 1020 may identify that indication information is received from the E2 node 1010 or another entity. The indication information may include at least one of status information for the RIC subscription(s), status information of the Near-RT RIC 1020 (e.g., error, reactivation, memory reallocation), or status information of the E2 node 1010 (e.g., error, reactivation, memory reallocation). The Near-RT RIC 1020 may initiate a subscription audit procedure. In addition, for example, the Near-RT RIC 1020 may identify that a subscription response message or a subscription failure message corresponding to the transmission of the subscription request message is not received within a certain period after transmitting the subscription request message.

In FIG. 12B, the RIC subscription audit procedure initiated by the Near-RT RIC 1020 is exemplified, but the RIC subscription audit procedure may also be initiated by the E2 node 1010. The E2 node 1010 may detect the occurrence of the specific event in the same manner. For the operations of the examples described above, the Near-RT RIC 1020 may be replaced with the E2 node 1010.

It step 1240, a RIC subscription audit procedure may be performed. The Near-RT RIC 1020 may initiate the RIC subscription audit procedure based on identifying the occurrence of the specific event. In operation 1291, the Near-RT RIC 1020 may transmit a RIC subscription audit request message to the E2 node 1010. For the RIC subscription audit request message, Table 5, Table 8, Table 10, or Table 12 may be referred to. In operation 1293, the E2 node 1010 may transmit a RIC subscription audit response message to the Near-RT RIC 1020. For the RIC subscription audit response message, Table 6, Table 9, Table 11, or Table 13 may be referred to. According to an embodiment, the RIC subscription audit response message may include information (e.g., a RIC subscription list) related to one or more RIC subscriptions. For example, the RIC subscription audit response message may include a first RAN function ID and a first RIC request ID of a first RIC subscription procedure 1271 and a second RAN function ID and a second RIC request ID of a second RIC subscription procedure 1273.

Although a subscription audit procedure initiated by the Near-RT RIC 1020 is illustrated in FIG. 12B, the embodiments of the present disclosure are not limited thereto. According to an embodiment, the E2 node 1010 may initiate the subscription audit procedure, based on identifying the occurrence of a specific event.

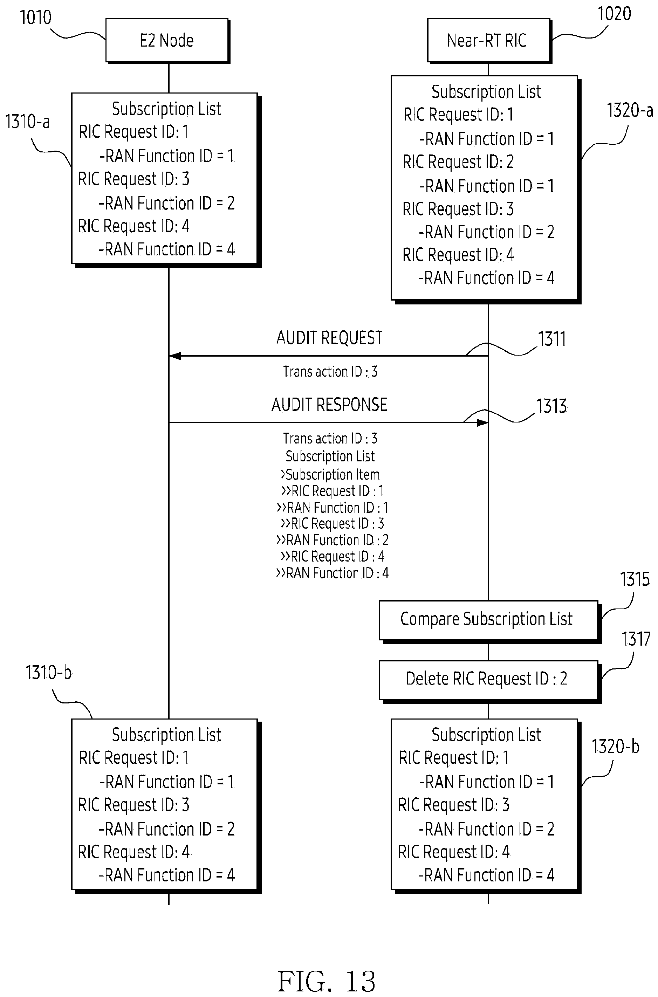

FIG. 13 illustrates an example of subscription management using a subscription audit procedure according to an embodiment. In FIG. 13, an audit procedure according to a rebooting of a subscription manager of a Near-RT RIC (e.g., the Near-RT RIC 1020) or a periodic audit procedure is described. RIC subscriptions may be established through one or more subscription procedures between the Near-RT RIC 1020 and an E2 node (e.g., the E2 node 1010).

Referring to FIG. 13, the E2 node 1010 has subscription information 1310-a. The subscription information 1310-a may include information on one or more RIC subscriptions. The RIC subscription may be specified by a RAN function ID (i.e., RAN Function ID) and a RIC request ID (i.e., RIC Request ID). For example, the subscription information 1310-a of the E2 node 1010 may include information on three RIC subscriptions. The subscription information 1310-a of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}].

The Near-RT RIC 1020 has subscription information 1320-a. The subscription information 1320-a may include information on one or more RIC subscriptions. The RIC subscription may be specified by a RAN function ID (i.e., RAN Function ID) and a RIC request ID (i.e., RIC Request ID). For example, the subscription information 1320-a of the Near-RT RIC 1020 may include information on four RIC subscriptions. The subscription information 1320-a of the Near-RT RIC 1020 may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}].

In operation 1311, the Near-RT RIC 1020 may transmit a RIC subscription audit request ('AUDIT REQUEST') message to the E2 node 1010. Based on configuration information for RIC subscription audit (e.g., passage of a certain period in FIG. 12A or occurrence of a certain event in FIG. 12B), the Near-RT RIC 1020 may initiate a subscription audit procedure. For the RIC subscription audit request message, Tables 5 to 8 may be referred to. For example, the Near-RT RIC 1020 may transmit a RIC subscription audit request message including a transaction ID indicating '3'. For example, the Near-RT RIC 1020 may transmit a RIC subscription audit request message including information for indicating the subscription information 1320-a of the Near-RT RIC 1020.

In operation 1313, the E2 node 1010 may transmit, to the Near-RT RIC 1020, a RIC subscription audit response ('AUDIT RESPONSE') message. For the RIC subscription audit response message, Tables 5 to 9 may be referred to. For example, the E2 node 1010 may transmit a RIC subscription audit response message including a transaction ID indicating '3'. The E2 node 1010 may include the subscription information 1310-a of the E2 node 1010 in the RIC subscription audit response message. The RIC subscription audit response message may include a list consisting of [{RIC Request ID: 1, RAN Function ID: 1}, {RIC Request ID: 3, RAN Function ID: 2}, {RIC Request ID: 4, RAN Function ID: 4}]. The Near-RT RIC 1020 may obtain the subscription information 1310-a of the E2 node 1010 from the RIC subscription audit response message.

In operation 1315, the Near-RT RIC 1020 may compare the subscription information 1310-a of the E2 node 1010 with the subscription information 1320-a of the Near-RT RIC 1020. The Near-RT RIC 1020 may identify that the subscription information 1320-a of the Near-RT RIC 1020 is inconsistent with the subscription information 1310-a of the E2 node 1010. As a result of the comparison, the Near-RT RIC 1020 may identify that the subscription information 1320-a of the Near-RT RIC 1020 further includes RIC subscriptions corresponding to 'RIC Request ID: 2' in comparison to the subscription information 1310-a of the E2 node 1010.

In operation 1317, the Near-RT RIC 1020 may delete the RIC subscription corresponding to 'RIC Request ID: 2' and 'RIC Request ID: 2'.

The subscription information 1310-b of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}]. By operation 1317, the subscription information 1320-a of the Near-RT RIC 1020 may be updated to the subscription information 1320-b. The subscription information 1320-b of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

In FIG. 13, a procedure for matching the subscription information of the E2 node 1010 with the subscription information of the Near-RT RIC 1020 is described. Although not shown in FIG. 13, a procedure for RIC subscription corresponding to 'RIC Request ID: 2' deleted through inconsistency, that is, a RIC subscription procedure, may be additionally performed. The Near-RT RIC 1020 may perform a RIC subscription procedure based on RIC subscription information (e.g., 'RIC Request ID: 2', RAN Function ID: 1) registered in a subscription manager of the Near-RT RIC 1020. According to an embodiment, the Near-RT RIC 1020 may transmit a RIC subscription request message (e.g., RIC SUBSCRIPTION REQUEST message) including RIC subscription information corresponding to 'RIC Request ID: 2'. The RIC subscription request message may include information on a RAN function (e.g., RAN Function ID: 1). The E2 node 1010 may transmit a RIC subscription response message (e.g., RIC SUBSCRIPTION RESPONSE message) to the Near-RT RIC 1020.

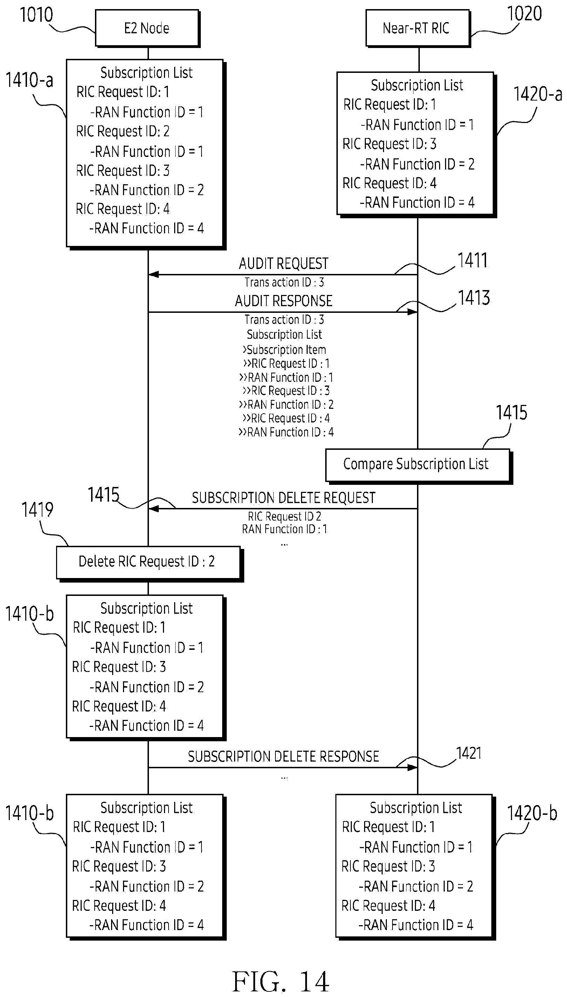

FIG. 14 illustrates an example of subscription management using a subscription audit procedure according to an embodiment. In FIG. 14, an audit procedure according to a rebooting of a subscription manager of a Near-RT RIC (e.g., the Near-RT RIC 1020) or a periodic audit procedure is described. RIC subscriptions may be established through one or more subscription procedures between the Near-RT RIC 1020 and the E2 node (e.g., the E2 node 1010).

Referring to FIG. 14, the E2 node 1010 has subscription information 1410-a. The subscription information 1410-a may include information on one or more RIC subscriptions. The RIC subscription may be specified by a RAN function ID (i.e., RAN Function ID) and a RIC request ID (i.e., RIC Request ID). For example, the subscription information 1410-a of the E2 node 1010 may include information on four RIC subscriptions. The subscription information 1410-a of the E2 node 1010 may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}].

The Near-RT RIC 1020 has subscription information 1420-a. The subscription information 1420-a may include information on one or more RIC subscriptions. RIC subscriptions may be specified by a RAN function ID (i.e., RAN Function ID) and a RIC request ID (i.e., RIC Request ID). For example, the subscription information 1420-a of the Near-RT RIC 1020 may include information on three RIC subscriptions. The subscription information 1420-a of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

In operation 1411, the Near-RT RIC 1020 may transmit a RIC subscription audit request ('AUDIT REQUEST') message to the E2 node 1010. Based on configuration information for RIC subscription audit (e.g., passage of a certain period in FIG. 12A or occurrence of a certain event in FIG. 12B), the Near-RT RIC 1020 may initiate a subscription audit procedure. For the RIC subscription audit request message, Table 5, Table 8, Table 10, or Table 12 may be referred to. For example, the Near-RT RIC 1020 may transmit a RIC subscription audit request message including a transaction ID indicating '3'.

In operation 1413, the E2 node 1010 may transmit a RIC subscription audit response ('AUDIT RESPONSE') message to the Near-RT RIC 1020. For the RIC subscription audit response message, Table 6, Table 9, Table 11, or Table 13 may be referred to. For example, the E2 node 1010 may transmit a RIC subscription audit response message including a transaction ID indicating '3'. The E2 node 1010 may include the subscription information 1410-a of the E2 node 1010 in the RIC subscription audit response message. The RIC subscription audit response message may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}]. The Near-RT RIC 1020 may obtain the subscription information 1410-a of the E2 node 1010 from the RIC subscription audit response message.

In operation 1415, the Near-RT RIC 1020 may compare the subscription information 1410-a of the E2 node 1010 with the subscription information 1420-a of the Near-RT RIC 1020. The Near-RT RIC 1020 may identify that the subscription information 1420-a of the Near-RT RIC 1020 is inconsistent with the subscription information 1410-a of the E2 node 1010. As a result of the comparison, the Near-RT RIC 1020 may identify that the subscription information 1420-a of the Near-RT RIC 1020 does not include a RIC subscription corresponding to 'RIC Request ID: 2' in comparison to the subscription information 1410-a of the E2 node 1010. The Near-RT RIC 1020 may request deletion of the RIC subscription corresponding to 'RIC Request ID: 2' to the E2 node 1010. The Near-RT RIC 1020 may perform RIC Subscription Delete procedure with the E2 node 1010.

In operation 1417, the Near-RT RIC 1020 may transmit a subscription delete request ('RIC SUBSCRIPTION DELETE REQUEST') message to the E2 node 1010. The subscription delete request message may include inconsistent subscription information. The subscription delete request message may include a RIC request ID and a RAN function ID. For example, the subscription delete request message may have a format as shown in the table below. As an example, according to the format as shown in the table below, the RIC Request ID of the subscription delete request message may indicate '2' and the RAN Function ID of the subscription delete request message may indicate '1'.

**[Table 14]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |

'M' represents 'mandatory', and 'O' represents 'optional'. IE for 'Message Type' may have a format as shown in Table 7.

In operation 1419, the E2 node 1010 may delete the 'RIC Request ID: 2' and the RIC subscription corresponding to 'RIC Request ID: 2'. The E2 node 1010 may determine a target function using information in the RAN Function ID and delete a corresponding RIC event trigger using the information in the RIC Request ID. By operation 1419, the subscription information 1410-a of the E2 node 1010 may be updated to the subscription information 1410-b.

In operation 1421, the E2 node 1010 may transmit a subscription delete response ('RIC SUBSCRIPTION DELETE RESPONSE') message to the Near-RT RIC 1020. The subscription delete response message may be used to accept a request from the Near-RT RIC 1020 and delete an existing subscription within the E2 node 1010. For example, the subscription delete response message may have a format as shown in the table below. As an example, according to the format as shown in the table below, the RIC Request ID of the subscription delete response message may indicate '2' and the RAN Function ID of the subscription delete response message may indicate '1'.

**[Table 15]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |

'M' represents 'mandatory', and 'O' represents 'optional'. The IE for 'Message Type' may have the format as shown in Table 7.

The subscription information 1410-b of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}]. The subscription information 1420-b of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

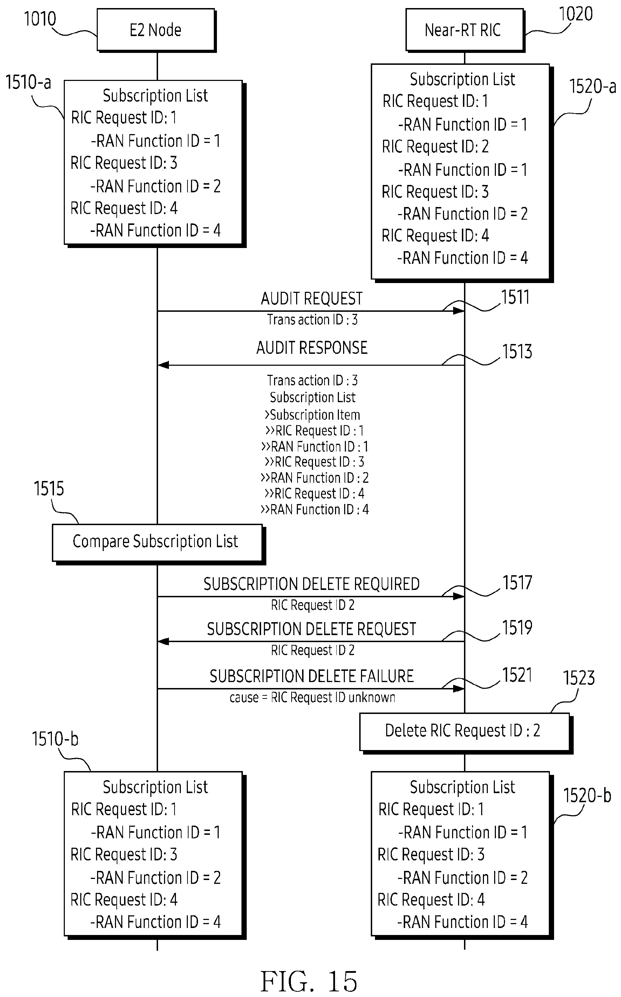

FIG. 15 illustrates an example of subscription management using a subscription audit procedure according to an embodiment. In FIG. 15, an audit procedure according to a rebooting of a software block of an E2 node (e.g., the E2 node 1010) or a periodic audit procedure is described. RIC subscriptions may be established through one or more subscription procedures between the E2 node 1010 and a Near-RT RIC (e.g., the Near-RT RIC 1020).

Referring to FIG. 15, the E2 node 1010 has subscription information 1510-a. The subscription information 1510-a may include information on one or more RIC subscriptions. The RIC subscription may be specified by a RAN function ID (i.e., RAN Function ID) and a RIC request ID (i.e., RIC Request ID). For example, the subscription information 1510-a of the E2 node 1010 may include information on three RIC subscriptions. The subscription information 1510-a of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}].

The Near-RT RIC 1020 has subscription information 1520-a. The subscription information 1520-a may include information on one or more RIC subscriptions. The RIC subscriptions may be specified by a RAN function ID (i.e., RAN Function ID) and a RIC request ID (i.e., RIC Request ID). For example, the subscription information 1520-a of the Near-RT RIC 1020 may include information on four RIC subscriptions. The subscription information 1520-a of Near-RT RIC 1020 may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}].

In operation 1511, the E2 node 1010 may transmit an RIC subscription audit request ('AUDIT REQUEST') message to the Near-RT RIC 1020. Based on configuration information for the RIC subscription audit (e.g., passage of a certain period in FIG. 12A or occurrence of a certain event in FIG. 12B), the Near-RT RIC 1020 may initiate a subscription audit procedure. For the RIC subscription audit request message, Table 5, Table 8, Table 10, or Table 12 may be referred to. For example, the Near-RT RIC 1020 may transmit an RIC subscription audit request message including a transaction ID indicating '3'.

In operation 1513, the Near-RT RIC 1020 may transmit a RIC subscription audit response ('AUDIT RESPONSE') message to the E2 node 1010. For the RIC subscription audit response message, Table 6, Table 9, Table 11, or Table 13 may be referred to. For example, the Near-RT RIC 1020 may transmit a RIC subscription audit response message including a transaction ID indicating '3'. The Near-RT RIC 1020 may include the subscription information 1520-a of the Near-RT RIC 1020 in the RIC subscription audit response message. The RIC subscription audit response message may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}]. The E2 node 1010 may obtain the subscription information 1520-a of the Near-RT RIC 1020 from the RIC subscription audit response message.

In operation 1515, the E2 node 1010 may compare the subscription information 1510-a of the E2 node 1010 with the subscription information 1520-a of the Near-RT RIC 1020. The E2 node 1010 may identify that the subscription information 1520-a of the Near-RT RIC 1020 is inconsistent with the subscription information 1510-a of the E2 node 1010. As a result of the comparison, the E2 node 1010 may identify that the subscription information 1520-a of the Near-RT RIC 1020 further includes an RIC subscription corresponding to 'RIC Request ID: 2' in comparison to the subscription information 1510-a of the E2 node 1010.

In operation 1517, the E2 node 1010 may transmit a 'RIC SUBSCRIPTION DELETE REQUIRED' message to the Near-RT RIC 1020. The subscription delete request message may be used to enable the E2 node 1010 to request deletion of existing RIC subscription(s) of the E2 node 1010 that were previously generated for the Near-RT RIC 1020. The subscription delete request message may include inconsistent subscription information. The subscription delete request message may include a RIC request ID and a RAN function ID. The subscription delete request message may include information about a cause for each RIC subscription requesting removal. For example, the subscription delete request message may have a format as shown in the table below. As an example, according to the format as shown in the table below, the RIC Request ID of the subscription delete request message may indicate '2', and the RAN Function ID of the subscription delete request message may indicate '1'.

**[Table 16]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| List of RIC Subscriptions To Be Removed | | | 1.. <maxofRICreque stID> | | EACH | Ignore |
| >RIC Request ID | M | | 9.2.7 | | YES | reject |
| >RAN Function ID | M | | 9.2.8 | | YES | reject |
| >Cause | | | | | | |

'M' represents 'mandatory', and 'O' represents 'optional'. The IE for 'Message Type' may have the format as shown in Table 7. The 'Cause' IE may be referenced in Table 17 below.

**[Table 17]**

| **IE/Group Name** | **Presence** | **Range** | **IE type and reference** | **Semantics description** |
|---|---|---|---|---|
| CHOICE Cause Group | | | | |
| >RIC services | | | | |
| >>RIC Request | O | | ENUMERATED (RAN Function ID invalid, | |
| | | | Action not supported, | |
| | | | Excessive actions, | |
| | | | Duplicate action, | |
| | | | Duplicate Event Trigger, | |
| | | | Function resource limit, | |
| | | | RIC Request ID unknown, | |
| | | | Inconsistent Action/subsequent Action sequence, | |
| | | | Control message invalid, | |
| | | | RIC Call process ID invalid, | |
| | | | Control timer expired, | |
| | | | Control failed to execute, | |
| | | | System not ready, unspecified, ...) | |
| >>RIC Service | O | | ENUMERATED RAN Function not supported, | |
| | | | Excessive functions, | |
| | | | RIC resource limit, ...) | |
| >>E2 node | O | | ENUMERATED (E2 node component unknown, ...) | |
| >Transport Layer | | | | |
| >>Transport Layer Cause | M | | | |
| >Protocol | | | | |
| >>Protocol Cause | M | | ENUMERATED (Transfer Syntax Error, | |
| | | | Abstract Syntax Error (Reject), | |
| | | | Abstract Syntax Error (Ignore and Notify), | |
| | | | Message not Compatible with Receiver State, | |
| | | | Semantic Error, | |
| | | | Abstract Syntax Error (Falsely Constructed Message), Unspecified, ...) | |
| >Misc | | | | |
| >>Miscellan eous Cause | M | | ENUMERATED (Control Processing Overload, | |
| | | | Hardware Failure, | |
| | | | O&M Intervention, Unspecified, ...) | |

In operation 1519, the Near-RT RIC 1020 may transmit a subscription delete request ('RIC SUBSCRIPTION DELETE REQUEST') message to the E2 node 1010. The subscription delete request message may include inconsistent subscription information. The subscription delete request message may include a RIC request ID and a RAN function ID. For example, the subscription delete request message may have a format as shown in Table 14. The RIC Request ID of the subscription delete request message may indicate '2', and the RAN Function ID of the subscription delete request message may indicate '1'.

In operation 1521, the E2 node 1010 may transmit a subscription delete failure ('RIC SUBSCRIPTION DELETE FAILURE') message to the Near-RT RIC 1020. For example, the subscription delete response message may have a format of Table 11. The RIC Request ID of the subscription delete response message may indicate '2', and the RAN Function ID of the subscription delete response message may indicate '1'. According to an embodiment, the subscription delete failure message may include cause information. The cause information is a 'Cause' IE, and Table 13 may be referred to. According to an embodiment, the E2 node 1010 may transmit a subscription delete failure message including cause information set to 'RIC Request ID unknown' to the Near-RT RIC 1020.

In operation 1523, the Near-RT RIC 1020 may delete 'RIC Request ID: 2' and an RIC subscription corresponding to the 'RIC Request ID: 2'.

The subscription information 1510-b of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}]. By operation 1517 to operation 1521, the subscription information 1520-a of the Near-RT RIC 1020 may be updated to the subscription information 1520-b. The subscription information 1520-b of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

In FIG. 15, a procedure for matching the subscription information of the E2 node 1010 with the subscription information of the Near-RT RIC 1020 is described. Although not shown in FIG. 15, a procedure for RIC subscription corresponding to 'RIC Request ID: 2' deleted through inconsistency, that is, a RIC subscription procedure, may be additionally performed. The Near-RT RIC 1020 may perform a RIC subscription procedure based on the RIC subscription information (e.g., 'RIC Request ID: 2', RAN Function ID: 1) registered in a subscription manager of the Near-RT RIC 1020. According to an embodiment, the Near-RT RIC 1020 may transmit a RIC subscription request message (e.g., RIC SUBSCRIPTION REQUEST message) including the RIC subscription information corresponding to 'RIC Request ID: 2'. The RIC subscription request message may include information (e.g., RAN Function ID: 1) on a RAN function. The E2 node 1010 may transmit a RIC subscription response message (e.g., RIC SUBSCRIPTION RESPONSE message) to the Near-RT RIC 1020.

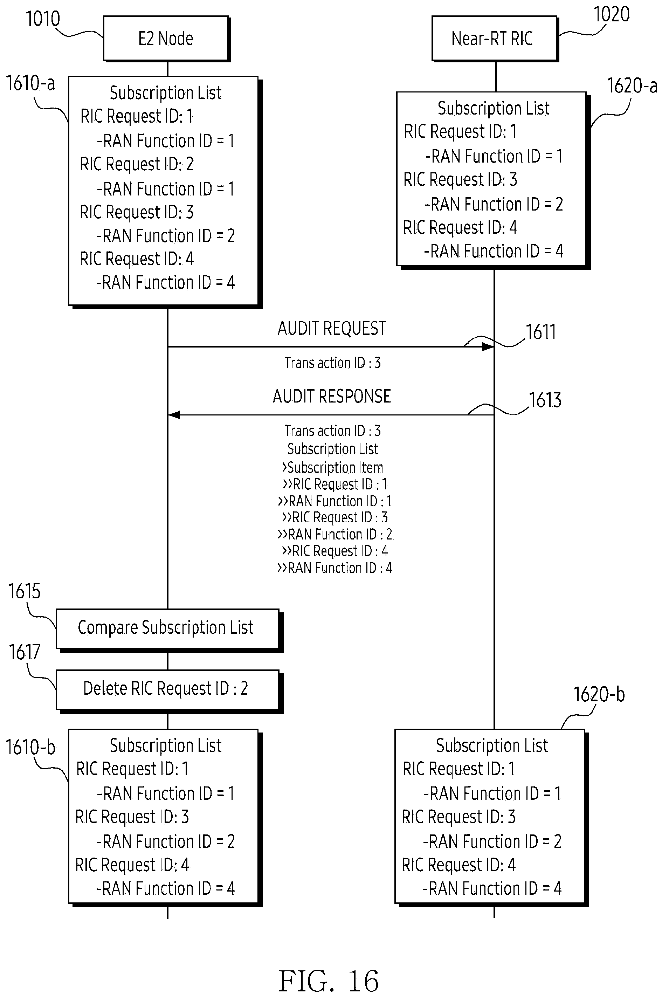

FIG. 16 illustrates an example of subscription management using a subscription audit procedure according to an embodiment. In FIG. 16, an audit procedure or according to a rebooting of a software block of an E2 node (e.g., the E2 node 1010) a periodic audit procedure is described. RIC subscriptions may be established through one or more subscription procedures between the E2 node 1010 and a Near-RT RIC (e.g., the Near-RT RIC 1020).

Referring to FIG. 16, the E2 node 1010 has subscription information 1610-a. The subscription information 1610-a may include information on one or more RIC subscriptions. The RIC subscription may be specified by a RAN function ID (i.e., RAN Function ID) and a RIC request ID (i.e., RIC Request ID). For example, the subscription information 1610-a of the E2 node 1010 may include information on four RIC subscriptions. The subscription information 1610-a of the E2 node 1010 may include a list consisting of [{RIC Request ID: 1, RAN Function ID: 1}, {RIC Request ID: 2, RAN Function ID: 1}, {RIC Request ID: 3, RAN Function ID: 2}, {RIC Request ID: 4, RAN Function ID: 4}].

The Near-RT RIC 1020 has subscription information 1620-a. The subscription information 1620-a may include information on one or more RIC subscriptions. RIC subscription may be specified by a RAN function ID (i.e., RAN Function ID) and a RIC request ID (i.e., RIC Request ID). For example, the subscription information 1620-a of the Near-RT RIC 1020 may include information on three RIC subscriptions. The subscription information 1620-a of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

In operation 1611, the E2 node 1010 may transmit an RIC subscription audit request ('AUDIT REQUEST') message to the Near-RT RIC 1020. Based on configuration information for the RIC subscription audit (e.g., passage of a certain period in FIG. 12A or occurrence of a certain event in FIG. 12B), the Near-RT RIC 1020 may initiate a subscription audit procedure. For the RIC subscription audit request message, Table 5, Table 8, Table 10, or Table 12 may be referred to. For example, the Near-RT RIC 1020 may transmit an RIC subscription audit request message including a transaction ID indicating '3'.

In operation 1613, the Near-RT RIC 1020 may transmit a RIC subscription audit response ('AUDIT RESPONSE') message to the E2 node 1010. For the RIC subscription audit response message, Table 6, Table 9, Table 11, or Table 13 may be referred to. For example, the Near-RT RIC 1020 may transmit a RIC subscription audit response message including a transaction ID indicating '3'. The Near-RT RIC 1020 may include the subscription information 1620-a of the Near-RT RIC 1020 in the RIC subscription audit response message. The RIC subscription audit response message may include a list consisting of [{RIC Request ID: 1, RAN Function ID: 1}, {RIC Request ID: 3, RAN Function ID: 2}, {RIC Request ID: 4, RAN Function ID: 4}]. The E2 node 1010 may obtain the subscription information 1620-a of the Near-RT RIC 1020 from the RIC subscription audit response message.

In operation 1615, the E2 node 1010 may compare the subscription information 1610-a of the E2 node 1010 with the subscription information 1620-a of the Near-RT RIC 1020. The E2 node 1010 may identify that the subscription information 1620-a of the Near-RT RIC 1020 is inconsistent with the subscription information 1610-a of the E2 node 1010. As a result of the comparison, the E2 node 1010 may identify that the subscription information 1620-a of the Near-RT RIC 1020 further includes a RIC subscription corresponding to 'RIC Request ID: 2' in comparison to the subscription information 1610-a of the E2 node 1010.

In operation 1617, the E2 node 1010 may delete the 'RIC Request ID: 2' and the RIC subscriptions corresponding to the 'RIC Request ID: 2'. The subscription information 1610-b of the E2 node 1010 may include a list consisting of [{RIC Request ID: 1, RAN Function ID: 1}, {RIC Request ID: 3, RAN Function ID: 2}, {RIC Request ID: 4, RAN Function ID: 4}]. The subscription information 1620-b of the Near-RT RIC 1020 may include a list consisting of [{RIC Request ID: 1, RAN Function ID: 1}, {RIC Request ID: 3, RAN Function ID: 2}, {RIC Request ID: 4, RAN Function ID: 4}].

In this disclosure, an audit procedure is described as a procedure for verifying RIC subscription information. The term 'audit' for the above-described operations may be replaced with other terms having equivalent technical meanings, such as 'confirmation', 'examination', 'status request/report', and the like.

In embodiments, a method performed by an E2 node may include transmitting an audit request message to a near-real time radio access network intelligence controller (Near-RT RIC). The method may include receiving an audit response message from the Near-RT RIC. The RIC subscription audit response message may include one or more subscription information within the Near-RT RIC. Each of the one or more subscription information may include a RAN function (identifier) ID and a RIC request ID for the corresponding RIC subscription.

According to an embodiment, the audit request message may include a transaction ID. The audit response message may include the transaction ID.

According to an embodiment, the audit request message may be transmitted to the Near-RT RIC based on the arrival of a specified period or identifying a rebooting of a functional block of the E2 node.

According to an embodiment, the method may include receiving a RIC subscription delete request message from the Near-RT RIC. The method may include transmitting a RIC subscription delete response message to the Near-RT RIC. The RIC subscription delete request message may include information on a RIC subscription, which is identified based on a result of comparing one or more subscription information within the E2 node and subscription information registered in a subscription manager of the Near-RT RIC. The information may include a RAN function ID and a RIC request ID corresponding to the RIC subscription.

According to an embodiment, the method may include receiving a RIC subscription request message from the Near-RT RIC. The method may include transmitting a RIC subscription response message to the Near-RT RIC. The RIC subscription request message may include information on a RIC subscription, which is identified based on a result of comparing one or more subscription information within the E2 node and subscription information registered in a subscription manager of the Near-RT RIC. The information may include a RAN function ID and a RIC request ID corresponding to the RIC subscription.

In embodiments, a method performed by a Near-RT RIC may include transmitting an audit request message to an E2 node. The method may include receiving an audit response message from the E2 node. The RIC subscription audit response message may include one or more subscription information within the E2 node. Each subscription information of the one or more subscription information may include a RAN function ID and a RIC request ID for the corresponding RIC subscription.

According to an embodiment, the audit request message may include a transaction ID. The audit response message may include the transaction ID.

According to an embodiment, the audit request message may be transmitted to the E2 node based on the arrival of a specified period or identifying a rebooting of a functional block of the E2 node.

According to an embodiment, the method may include transmitting a RIC subscription delete request message to the E2 node. The method may include receiving a RIC subscription delete response message from the E2 node. The RIC subscription delete request message may include information on a RIC subscription, which is identified based on a result of a comparison between one or more subscription information within the E2 node and subscription information registered in a subscription manager of the Near-RT RIC. The information may include a RAN function ID and a RIC request ID corresponding to the RIC subscription.

According to an embodiment, the method may include transmitting a RIC subscription request message to the E2 node. The method may include receiving a RIC subscription response message from the E2 node. The RIC subscription request message may include information on a RIC subscription, which is identified based on a result of a comparison between one or more subscription information within the E2 node and subscription information registered in a subscription manager of the Near-RT RIC. The information may include a RAN function ID and a RIC request ID corresponding to the RIC subscription.

In embodiments, a method performed by an E2 node may include receiving an audit request message from a Near-RT RIC. The method may include transmitting an audit response message to the Near-RT RIC. The RIC subscription audit response message may include one or more subscription information within the E2 node. Each of the one or more subscription information may include a RAN function ID and a RIC request ID for the corresponding RIC subscription.

According to an embodiment, the audit request message may include a transaction ID. The audit response message may include the transaction ID.

According to an embodiment, the audit request message may be received from the Near-RT RIC based on the arrival of a specified period or identifying a rebooting of a functional block of the E2 node.

According to an embodiment, the method may include receiving a RIC subscription delete request message from the Near-RT RIC. The method may include transmitting a RIC subscription delete response message to the Near-RT RIC. The RIC subscription delete request message may include information on a RIC subscription, which is identified based on a result of comparing one or more subscription information within the E2 node and subscription information registered in a subscription manager of the Near-RT RIC. The information may include a RAN function ID and a RIC request ID corresponding to the RIC subscription.

According to an embodiment, the method may include receiving a RIC subscription request message from the Near-RT RIC. The method may include transmitting a RIC subscription response message to the Near-RT RIC. The RIC subscription request message may include information on a RIC subscription, which is identified based on a result of comparing one or more subscription information within the E2 node and subscription information registered in a subscription manager of the Near-RT RIC. The information may include a RAN function ID and a RIC request ID corresponding to the RIC subscription.

In embodiments, a method performed by a Near-RT RIC may include receiving an audit request message from an E2 node. The method may include transmitting an audit response message to the E2 node. The RIC subscription audit response message may include one or more subscription information within the Near-RT RIC. Each subscription information of the one or more subscription information may include a RAN function ID and a RIC request ID for the corresponding RIC subscription.

According to an embodiment, the audit request message may include a transaction ID. The audit response message may include the transaction ID.

According to an embodiment, the audit request message may be received from the E2 node based on the arrival of a specified period or identifying a rebooting of a functional block of the E2 node.

According to an embodiment, the method may include transmitting a RIC subscription delete request message to the E2 node. The method may include receiving a RIC subscription delete response message from the E2 node. The RIC subscription delete request message may include information on a RIC subscription, which is identified based on a result of a comparison between one or more subscription information within the E2 node and subscription information registered in a subscription manager of the Near-RT RIC. The information may include a RAN function ID and a RIC request ID corresponding to the RIC subscription.

According to an embodiment, the method may include transmitting a RIC subscription request message to the E2 node. The method may include receiving a RIC subscription response message from the E2 node. The RIC subscription request message may include information on a RIC subscription, which is identified based on a result of a comparison between one or more subscription information within the E2 node and subscription information registered in a subscription manager of the Near-RT RIC. The information may include a RAN function ID and a RIC request ID corresponding to the RIC subscription.

In embodiments, an electronic device of an E2 node may include at least one transceiver, and at least one processor coupled with the at least one transceiver. The at least one processor may control the at least one transceiver to transmit an audit request message to a near-real time radio access network intelligence controller (Near-RT RIC). The at least one processor may control the at least one transceiver to receive an audit response message from the Near-RT RIC. The RIC subscription audit response message may include one or more subscription information within the Near-RT RIC. Each subscription information of the one or more subscription information may include a RAN function ID and a RIC request ID for the corresponding RIC subscription.

In embodiments, an electronic device of a Near-RT RIC may include at least one transceiver; and at least one processor coupled with the at least one transceiver. The at least one processor may control the at least one transceiver to transmit an audit request message to an E2 node. The at least one processor may control the at least one transceiver to receive an audit response message from the E2 node. The RIC subscription audit response message may include one or more subscription information within the E2 node. Each subscription information of the one or more subscription information may include a RAN function ID and a RIC request ID for the corresponding RIC subscription.

In embodiments, an electronic device of an E2 node may include at least one transceiver, and at least one processor coupled with the at least one transceiver. The at least one processor may control the at least one transceiver to receive an audit request message from a Near-RT RIC. The at least one processor may control the at least one transceiver to transmit an audit response message to the Near-RT RIC. The RIC subscription audit response message may include one or more subscription information within the E2 node. Each subscription information of the one or more subscription information may include a RAN function ID and a RIC request ID for the corresponding RIC subscription.

In embodiments, an electronic device of a Near-RT RIC may include at least one transceiver, and at least one processor coupled with the at least one transceiver. The at least one processor may control the at least one transceiver to receive an audit request message from an E2 node. The at least one processor may control the at least one transceiver to transmit an audit response message to the E2 node. The RIC subscription audit response message may include one or more subscription information in the Near-RT RIC. Each subscription information of the one or more subscription information may include a RAN function ID and a RIC request ID for the corresponding RIC subscription.

In embodiments, a method performed by a Near-RT RIC is provided. The method may include transmitting an audit request message to an E2 node. The method may include receiving an audit response message from the E2 node. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

According to an embodiment, the audit request message may include an ID for the RIC subscription audit procedure. The audit response message may include the ID for the RIC subscription audit procedure.

According to an embodiment, the RIC subscription audit request message may include a list of one or more RIC subscription information for which an audit is requested. Each RIC subscription information of the one or more RIC subscription information for which an audit is requested may include a RAN function ID and a RIC request ID. The one or more RIC subscription information included in the RIC subscription audit response message may include RIC subscription information confirmed by the E2 node among the one or more RIC subscription information for which an audit is requested.

According to an embodiment, the subscription audit response message may include at least one of an unknown list of at least one subscription information that is unknown to the E2 node among the one or more RIC subscription information for which the audit is requested, or a missing list of at least one subscription information that is not included in the one or more RIC subscription information for which the audit is requested and is held by the E2 node. The unknown list or the missing list may include a RAN function ID and a RIC request ID for each RIC subscription information.

In embodiments, a method performed by an E2 node is provided. The method may include receiving an audit request message from a near-real time radio access network intelligence controller (Near-RT RIC). The method may include transmitting an audit response message to the Near-RT RIC in response to the audit request message. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

According to an embodiment, the audit request message may include an ID for the RIC subscription audit procedure. The audit response message may include the ID for the RIC subscription audit procedure.

According to an embodiment, the RIC subscription audit request message may include a list of one or more RIC subscription information for which an audit is requested. Each RIC subscription information of the one or more RIC subscription information for which an audit is requested may include a RAN function ID and a RIC request ID. The one or more RIC subscription information included in the RIC subscription audit response message may include RIC subscription information confirmed by the E2 node among the one or more RIC subscription information for which an audit is requested.

According to an embodiment, the subscription audit response message may include at least one of an unknown list of at least one subscription information that is unknown to the E2 node among the one or more RIC subscription information for which the audit is requested, or a missing list of at least one subscription information that is not included in the one or more RIC subscription information for which the audit is requested and is held by the E2 node. The unknown list or the missing list may include a RAN function ID and a RIC request ID for each RIC subscription information.

In embodiments, an electronic device of Near-RT RIC is provided. The electronic device may include memory storing instructions, at least one transceiver, and at least one processor coupled with the at least one transceiver. The instructions, when executed by the at least one processor, may cause the electronic device to transmit an audit request message to the E2 node through the at least one transceiver, and receive an audit response message from the E2 node through the at least one transceiver. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, an electronic device of E2 node is provided. The electronic device may include memory storing instructions, at least one transceiver, and at least one processor coupled with the at least one transceiver. The instructions, when executed by the at least one processor, may cause the electronic device to receive an audit request message from a Near-RT RIC through the at least one transceiver, and transmit an audit response message to the Near-RT RIC through the at least one transceiver. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, a non-transitory storage medium is provided. The non-transitory storage medium may include memory storing instructions. The instructions, when executed by at least one processor, may cause a Near-RT RIC to transmit an audit request message to an E2 node and receive an audit response message from the E2 node. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

In embodiments, a non-transitory storage medium is provided. The non-transitory storage medium may include memory storing instructions. The instructions, when executed by at least one processor, may cause an E2 node to receive an audit request message from a Near-RT RIC and, transmit, in response to the audit request message, an audit response message to the Near-RT RIC. The RIC subscription audit request message may be used for a RIC subscription audit procedure. The RIC subscription audit response message may include a list of one or more RIC subscription information of the E2 node. Each RIC subscription information of the list of one or more RIC subscription information may include a RAN function ID and a RIC request ID.

The device and method according to the embodiments of the present disclosure may increase resource efficiency by reducing inconsistency of subscription information between two nodes and preventing unnecessary procedures (e.g., reset procedures), as a radio access network (RAN) intelligent controller (RIC) (e.g., the Near-RT RIC 1020) requests a subscription audit to an E2 node (e.g., the E2 node 1010) or the E2 node requests a subscription audit to the RIC, in a wireless communication system. By comparing subscription information registered in a subscription manager of the Near-RT RIC with subscription information stored in a software block of the E2 node, a procedure for deleting the RIC subscription or a RIC subscription request procedure may be performed. According to an embodiment, the procedure for deleting the RIC subscription of the present disclosure may include a RIC subscription delete request procedure (i.e., a RIC subscription delete request message and a RIC subscription delete procedure) initiated by the E2 node. According to an embodiment, the procedure for deleting the RIC subscription may include a RIC subscription delete procedure (i.e., a RIC subscription delete request message and a RIC subscription delete response message) initiated by the Near-RT RIC. According to an embodiment, the RIC subscription request procedure may be initiated by the Near-RT RIC and may include a RIC subscription request message and a RIC subscription response message.

The effects that can be obtained from the present disclosure are not limited to those described above, and any other effects not mentioned herein will be clearly understood by those having ordinary knowledge in the art to which the present disclosure belongs, from the following description.

Various embodiments as set forth herein may be implemented as software including one or more instructions that are stored in a storage medium that is readable by a machine(e.g., device performing functions of E2 node the 1000, device performing functions of the Near-RT RIC 1100). For example, a processor (e.g., the control unit 530) of the machine (e.g., the E2 node 1000, the Near-RT RIC 1100) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium. O-RAN enables a configuration of a virtualized intelligent network having a standardized open interface. For the network virtualization, operations according to embodiments may be implemented in a form of a recording medium (e.g., memory).

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by a near-real time radio access network intelligence controller (Near-RT RIC), the method comprising:
transmitting, to a E2 node, a radio access network intelligence controller (RIC) subscription audit request message to audit one or more RIC subscriptions on the E2 node, the RIC subscription audit request message including subscription information of the one or more RIC subscriptions; and
receiving, from the E2 node, a RIC subscription audit response message in response to the RIC subscription audit request message,
wherein the RIC subscription audit response message includes subscription information of at least one RIC subscription recognized in the E2 node, among the one or more RIC subscriptions, and
wherein, for each of the least one RIC subscription recognized in the E2 node, the subscription information includes a radio access network (RAN) function identifier (ID) and a RIC request ID.

2. The method of claim 1,
wherein the RIC subscription audit request message includes an ID for a RIC subscription audit procedure, and
wherein the RIC subscription audit response message includes the ID for the RIC subscription audit procedure.

3. The method of claim 1,
wherein the RIC subscription audit response message includes unknown information of at least one RIC subscription that is not known to the E2 node, among the one or more RIC subscriptions, and
wherein, for each of the least one RIC subscription that is not known to the E2 node, the unknown information includes a RAN function ID and a RIC request ID.

4. The method of claim 1,
wherein the RIC subscription audit response message includes missing information of at least one RIC subscription that is not included in the RIC subscription audit request message and is hold by the E2 node, and
wherein, for each of the least one RIC subscription that is not included in the RIC subscription audit request message and is hold by the E2 node, the missing information includes a RAN function ID and a RIC request ID.

5. The method of claim 1, further comprising:
transmitting, to the E2 node, a RIC subscription delete request message; and
receiving, from the E2 node, a RIC subscription delete response message in response to the RIC subscription delete request message,
wherein the RIC subscription delete request message includes information on a RIC subscription identified based on a difference between the one or more RIC subscriptions and the at least one RIC subscription recognized by the E2 node.

6. A method performed by a E2 node, the method comprising:
receiving, from a near-real time radio access network intelligence controller (Near-RT RIC), a radio access network intelligence controller (RIC) subscription audit request message to audit one or more RIC subscriptions on the E2 node, the RIC subscription audit request message including subscription information of the one or more RIC subscriptions; and
transmitting, to the Near-RT RIC, a RIC subscription audit response message in response to the RIC subscription audit request message,
wherein the RIC subscription audit response message includes subscription information of at least one RIC subscription recognized by the E2 node, among the one or more RIC subscriptions, and
wherein, for each of the least one RIC subscription recognized by the E2 node, the subscription information includes a radio access network (RAN) function identifier (ID) and a RIC request ID.

7. The method of claim 6,
wherein the RIC subscription audit request message includes an ID for a RIC subscription audit procedure, and
wherein the RIC subscription audit response message includes the ID for the RIC subscription audit procedure.

8. The method of claim 6,
wherein the RIC subscription audit response message includes unknown information of at least one RIC subscription that is not known to the E2 node, among the one or more RIC subscriptions, and
wherein, for each of the least one RIC subscription that is not known to the E2 node, the unknown information includes a RAN function ID and a RIC request ID.

9. The method of claim 6,
wherein the RIC subscription audit response message includes missing information of at least one RIC subscription that is not included in the RIC subscription audit request message and is hold by the E2 node, and
wherein, for each of the least one RIC subscription that is not included in the RIC subscription audit request message and is hold by the E2 node, the missing information includes a RAN function ID and a RIC request ID.

10. The method of claim 6, further comprising:
receiving, from the Near-RT RIC, a RIC subscription deletes request message; and
transmitting, to the Near-RT RIC, a RIC subscription deletes response message in response to the RIC subscription delete request message,
wherein the RIC subscription deletes request message includes information on a RIC subscription identified based on a difference between the one or more RIC subscriptions and the at least one RIC subscription recognized by the E2 node.

11. A near-real time radio access network intelligence controller (Near-RT RIC), comprising:
memory storing instructions,
a transceiver; and
a processor,
wherein the instructions cause, when executed by the processor, the Near-RT RIC to:
control the transceiver to transmit, to a E2 node, a radio access network intelligence controller (RIC) subscription audit request message to audit one or more RIC subscriptions on the E2 node, the RIC subscription audit request message including subscription information of the one or more RIC subscriptions; and
control the transceiver to receive, from the E2 node, a RIC subscription audit response message in response to the RIC subscription audit request message,
wherein the RIC subscription audit response message includes subscription information of at least one RIC subscription recognized in the E2 node, among the one or more RIC subscriptions, and
wherein, for each of the least one RIC subscription recognized in the E2 node, the subscription information includes a radio access network (RAN) function identifier (ID) and a RIC request ID.

12. The Near-RT RIC of the claim 11, wherein the instructions cause, when executed by the processor, the Near-RT RIC to perform method of claims 2 to 5.

13. A device of E2 node, the device comprising:
memory storing instructions,
a transceiver; and
a processor,
wherein the instructions cause, when executed by the processor, the device to:
control the transceiver to receive, from a near-real time radio access network intelligence controller (Near-RT RIC), a radio access network intelligence controller (RIC) subscription audit request message to audit one or more RIC subscriptions on the E2 node, the RIC subscription audit request message including subscription information of the one or more RIC subscriptions; and
control the transceiver to transmit, to the Near-RT RIC, a RIC subscription audit response message in response to the RIC subscription audit request message,
wherein the RIC subscription audit response message includes subscription information of at least one RIC subscription recognized by the E2 node, among the one or more RIC subscriptions, and
wherein, for each of the least one RIC subscription recognized by the E2 node, the subscription information includes a radio access network (RAN) function identifier (ID) and a RIC request ID.

14. The device of the claim 13, wherein the instructions cause, when executed by the processor, the device to perform method of claims 7 to 10.

15. A non-transitory computer-readable storage medium storing:
instructions that, when executed by a processor of a near-real time radio access network intelligence controller (Near-RT RIC), cause the Near-RT RIC to perform any method of claims 1 to 5, or
instructions that, when executed by a processor of a E2 node, cause the E2 node to perform any method of claims 6 to 10.
